# EUROPEAN PATENT SPECIFICATION

(11) **EP 4 610 939 B1**
(45) Date of publication and mention of the grant of the patent: **28.10.2026**
(21) Application number: 24799851.1
(22) Date of filing: 10.04.2024
(51) Int. Cl.: G06T 7/73, G06T 7/60, G06V 10/44, G06V 20/20

(54) **POSTURE DETECTION METHOD AND APPARATUS FOR AR DEVICE, AND ELECTRONIC DEVICE, STORAGE MEDIUM AND PROGRAM PRODUCT**
HALTUNGSDETEKTIONSVERFAHREN UND -VORRICHTUNG FÜR AR-VORRICHTUNG SOWIE ELEKTRONISCHE VORRICHTUNG, SPEICHERMEDIUM UND PROGRAMMPRODUKT
PROCÉDÉ ET APPAREIL DE DÉTECTION DE POSTURE POUR DISPOSITIF AR, DISPOSITIF ÉLECTRONIQUE, SUPPORT DE STOCKAGE ET PRODUIT PROGRAMME

(30) Priority: 04.05.2023 CN 202310494453
(43) Date of publication of application: 03.09.2025
(73) Proprietor: Tencent Technology (Shenzhen) Company Limited, Shenzhen, Guangdong 518057 (CN)
(72) Inventor: GU, Zhaopeng, Shenzhen, Guangdong 518057 (CN); DING, Xun, Shenzhen, Guangdong 518057 (CN)
(74) Representative: Nederlandsch Octrooibureau
(86) International application number: PCT/CN2024/086911
(87) International publication number: WO 2024/227393

(56) References cited:
- CN-A- 102 607 526
- CN-A- 113 689 484
- US-A1- 2017 221 224
- US-A1- 2018 374 237
- US-A1- 2019 102 613
- US-A1- 2023 098 910

## Description

### FIELD OF THE TECHNOLOGY

This application relates to the field of computer technologies, particularly to the field of augmented reality (AR) technologies, and more particularly to a method and apparatus for detecting a pose of an AR device, an electronic device, and a storage medium.

### BACKGROUND OF THE DISCLOSURE

Technologies such as Augmented Reality (AR) and Virtual Reality (VR) have gradually matured and entered into the public eye. AR is a technology that combines virtual and real worlds, which can present virtual objects such as texts, pictures, three-dimensional models, and the like to the real world through an AR device, to enhance the sense of reality. The pose detection for an AR device is an important part of AR technologies.

Using a head-mounted device as an example, a method for detecting a pose of a head-mounted AR device is mainly implemented using a camera, a depth sensor, and other devices. All the devices are arranged on the head-mounted device. Therefore, the camera and the depth sensor require the head-mounted AR device to provide high power during operation, and the operation of the depth sensor also has certain requirements on the computing power of the device, leading to high power consumption of the head-mounted device.

Therefore, reducing the power consumption and computing power required by the pose detection for an AR device is an urgent problem to be solved.

US 2023/0098910 A1 discloses tracking of a head mounted display using a mobile device. The mobile device determines its own six-degree-of-freedom pose in a reference coordinate system, for example using visual odometry, visual-inertial odometry, or simultaneous localisation and mapping. The head mounted display derives its localisation by sensing the mobile device, such as by imaging displayed markers or using depth data. Alternatively, the mobile device camera tracks markers or infrared light-emitting diodes on the head mounted display. The aim is to reduce head mounted display processing load, weight, power consumption and heat while maintaining low-latency localisation.

### SUMMARY

Embodiments of this application provide a method and apparatus for detecting a pose of an AR device, an electronic device, a storage medium, and a program product, to reduce the power consumption required by the pose detection for the AR device.

One aspect of this application provides a method for detecting a pose of an AR device, including:
acquiring, by illuminating the AR device with detection light, at least two images based on different photographing positions and/or orientations, the acquired images each comprising image feature points obtained by reflecting the detection light at device feature points on the AR device;
obtaining, based on the at least two acquired images, predicted distances each corresponding to one of at least two target image feature point pairs, the at least two target image feature point pairs sharing a common target image feature point;
determining target device feature points respectively corresponding to target image feature points of the at least two target image feature point pairs based on a comparison between the predicted distances and pre-determined distances between the device feature points on the AR device; and
determining pose information of the AR device based on respective position information of the target device feature points and the target image feature points.

An embodiment of this application provides an apparatus for detecting a pose of an AR device, including:
an obtaining unit, configured to configured to acquire, by illuminating the AR device with detection light, at least two images based on different photographing positions and/or orientations, the acquired images each comprising image feature points obtained by reflecting the detection light at device feature points on the AR device;
a prediction unit, configured to obtain, based on the at least two acquired images, predicted distances each corresponding to one of at least two target image feature point pairs, the at least two target image feature point pairs sharing a common target image feature point;
a comparison unit, configured to determine target device feature points respectively corresponding to target image feature points of the at least two target image feature point pairs based on a comparison between the predicted distances and pre-determined distances between the device feature points on the AR device; and
a determining unit, configured to determine pose information of the AR device based on respective position information of the target device feature points and the target image feature points.

In one embodiment, each of the images is acquired based on an acquisition device located at one of the photographing positions; and the prediction unit is further configured to:
determine the respective predicted distances of the at least two target image feature point pairs based on distances of the at least two target image feature point pairs in each acquired image and calibration parameters configured for representing a position relationship between the at least two acquisition devices.

In one embodiment, the actual distance between any two device feature points is different, and a difference between any two actual distances is greater than a first preset threshold.

In one embodiment, the comparison unit is further configured to:
respectively compare actual distances corresponding to device feature point pair s on the AR device with the predicted distances;
determine at least two device feature point pairs including a common device feature point based on a result of the comparison, where a difference between the actual distance corresponding to each device feature point pair and the corresponding predicted distance is less than a second preset threshold, and the second preset threshold is not greater than the first preset threshold; and
determine the target device feature points respectively corresponding to the target image feature points from the at least two device feature point pairs.

Another aspect of this application provides an electronic device, including a processor and a memory. The memory has a computer program stored therein. The computer program, when executed by the processor, causes the processor to implement the operations of the method for detecting a pose of an AR device according to any one of the above embodiments.

Another aspect of this application provides a non-transitory computer-readable storage medium, having a computer program stored therein. The computer program, when executed by a processor, method for detecting poses causes the processor to implement the operations of the method for detecting a pose of an AR device according to any one of the above embodiments.

An embodiment of this application provides a computer program product, including a computer program. The computer program, when executed by a processor, causes the processor to implement the operations of the pose detection method for an AR device according to any one of the above embodiments.

The beneficial effects of this application are as follows.

Embodiments of this application provide a method and apparatus for detecting a pose of an AR device, an electronic device, and a storage medium. In this application, detection light is emitted to the AR device through a base station, and at least two acquired images are obtained based on different photographing positions through the base station, and the status of reflection of the detection light by device feature points on the AR device is determined according to image feature points in the images. In other words, both the emission device and the photography device of the detection light are located on the base station, thereby avoiding power consumption of the AR device for the emission device and the photography device. Then, the base station predicts respective predicted distances of two target image feature point pairs including a common target image feature point in a real environment based on each acquired image, and compares the actual distances between the device feature points on the AR device with the predicted distances, to find the target device feature points respectively corresponding to the target image feature points. This process only involves simple distance calculation, i.e., distance comparison, and has a lower requirement on the computing power of the device. After finding the correspondence, the base station can calculate pose information of the AR device based on position information of the target device feature points in an AR device coordinate system and position information of the target image feature points in a base station coordinate system. The process of determining the pose of the AR device is also implemented by the base station, and does not require the AR device to provide computing power support. Therefore, the power consumption and computing power required by the pose detection for the AR device can be effectively reduced.

Additional features and advantages of this application will be set forth in the description which follows, and in part will be apparent from the description, or may be learned by the practice of this application. The objects and other advantages of this application can be realized and obtained by the structures particularly pointed out in the description, claims and drawings.

### BRIEF DESCRIPTION OF THE DRAWINGS

The accompanying drawings described herein are used to provide a further understanding of this application, and form a part of this application. Embodiments of this application and description thereof are used to explain this application, and do not constitute any inappropriate limitation to this application. In the accompanying drawings:
FIG. 1 is a schematic diagram of an application scenario of a method for detecting a pose of an AR device according to an embodiment of this application.
FIG. 2 is an overall flowchart of a pose detection method for an AR device according to an embodiment of this application.
FIG. 3 is a schematic diagram of an AR device according to an embodiment of this application.
FIG. 4 is a schematic diagram of an acquired image according to an embodiment of this application.
FIG. 5 is a schematic diagram of target image feature points according to an embodiment of this application.
FIG. 6 is a logic diagram of calculating predicted distances according to an embodiment of this application.
FIG. 7 is a flowchart of determining target device feature points respectively corresponding to target image feature points according to an embodiment of this application.
FIG. 8 is a diagram showing a correspondence between target image feature points and target device feature points according to an embodiment of this application.
FIG. 9 is a logic diagram of determining device feature points corresponding to target image feature points according to an embodiment of this application.
FIG. 10 is a diagram showing interaction between an AR device, a base station, and a terminal device according to an embodiment of this application.
FIG. 11 is a flowchart of a specific implementation of another method for detecting a pose of an AR device according to an embodiment of this application.
FIG. 12 is a logic diagram showing interaction between an AR device, a base station, and a terminal device according to an embodiment of this application.
FIG. 13 is a schematic structural diagram of a pose detection apparatus for an AR device according to an embodiment of this application.
FIG. 14 is a schematic structural diagram of hardware of an electronic device according to an embodiment of this application.

### DESCRIPTION OF EMBODIMENTS

To make the objectives, technical solutions, and advantages of embodiments of this application clearer, the following clearly and thoroughly describes the technical solutions of this application with reference to the accompanying drawings in the embodiments of this application. The scope of the invention and its embodiments is defined by the appended claims.

Some of the concepts involved in the embodiments of this application are described below.

Acquired image: It is an image obtained by a base station by photographing an AR device. A device feature point capable of reflecting detection light exists on the AR device. Correspondingly, the acquired image includes an image feature point obtained by reflecting the detection light based on the device feature point on the AR device, which reflects the status of reflection of infrared detection light by the device feature point.

Image feature point: The base station photographs a device feature point on the AR device to obtain a visible image feature point corresponding to the device feature point in the acquired image. Image feature points in this application include target image feature points and candidate image feature points. The target image feature points are three image feature points obtained by the base station for the first time. The candidate image feature points are candidate image feature points corresponding to candidate device feature points selected by the base station to adjust pose information after the pose information is obtained according to the target image feature points.

Device feature point: It is a point on the AR device and may be made of a material capable of reflecting infrared light (or other types of detection light, which is not limited herein). In the embodiments of the present disclosure including the embodiments of both the claims and the specification (hereinafter referred to as "all embodiments of the present disclosure"), to further improve the efficiency of determining points corresponding to the target image feature points on the base station side and reduce the error, distances between any two device feature points may be set to be different, and an absolute value of a difference between actual distances corresponding to any two device feature point pairs may be set to be greater than a first preset threshold.

Base station coordinate system: It is a coordinate system with a point on the base station as the origin. For example, if a center point of an acquisition device on the base station is used as the origin of the base station coordinate system, a position relationship between a point in the coordinate system and the base station can be reflected.

AR device coordinate system: It is a coordinate system with a point on the AR device as the origin. For example, when a midpoint of a line connecting centers of binocular lenses on the AR device is used as the origin of the AR device coordinate system, a position relationship between a point in the coordinate system and the AR device can be reflected.

Predicted distance: It is a distance between device feature points corresponding to two target image feature points calculated by the base station based on distances between the two target image feature points in a plurality of acquired images and a position relationship between the plurality of acquisition devices. The predicted distance is the distance in a spatial coordinate system between the device feature points corresponding to two target image feature points. Predicted distances in this application include a first predicted distance and a second predicted distance. The first predicted distance is a predicted distance of a target image feature point pair corresponding to three target image feature points. The second predicted distance is a predicted distance of another target image feature point pair corresponding to the three target image feature points.

The following is a brief introduction to the design idea of all embodiments of the present disclosure.

With the development of science, technologies such as AR and VR have gradually matured and entered into the public eye. AR is a technology that combines virtual and real worlds, which can present virtual objects such as texts, pictures, three-dimensional models, and the like to the real world through a head-mounted AR device, to enhance the sense of reality. The pose detection for a head-mounted AR device is a very basic and important part of AR technologies.

Often, head-mounted VR devices mainly adopt an outside-in approach, i.e., a sensor for determining the pose of the device is not located on the head-mounted device, but outside the head-mounted device. However, this approach requires the configuration of a light-emitting diode (LED) array on the head-mounted device, the LED array actively emits light, and the sensor senses the light to position the head-mounted device. The implementation process of this approach is complex, and the configuration of the LED array on the head-mounted device significantly increases the power consumption of the head-mounted device.

Methods for detecting poses for a head-mounted AR device mainly adopt an inside-out method, i.e., a camera and a depth sensor for determining the pose of the device are located directly on the head-mounted device. During the pose detection, the camera and the depth sensor consume a lot of power of the head-mounted device, and the depth sensor needs to perform a series of calculations, posing high requirements on the computing power of the head-mounted device.

Based on this, all embodiments of the present disclosure provide a method and apparatus for detecting a pose of an AR device, an electronic device, a storage medium, and a program product. In this application, detection light is emitted to the AR device through a base station, and at least two acquired images are obtained based on different photographing positions through the base station, and the reflection of the detection light by device feature points on the AR device is determined according to image feature points in the images. In other words, both the emission device and the photography device of the detection light are located on the base station, not on the AR device, thereby avoiding power consumption by the AR device for the emission device and the photography device.

Then, the base station predicts respective predicted distances of two target image feature point pairs including a common target image feature point in a real environment based on each acquired image, and compares the predicted distances with the actual distances between the device feature points on the AR device. Because the actual distances between the device feature points on the AR device are different, the target device feature points respectively corresponding to the target image feature points can be found through a distance comparison method.

Finally, the base station can calculate position information of the AR device relative to the base station, i.e., pose information of the AR device, based on position information of the target device feature points in an AR device coordinate system and position information of the target image feature points in a base station coordinate system. The process of determining the pose of the AR device is also implemented by the base station, and does not require the AR device to provide computing power support. Therefore, the power consumption and computing power required by the pose detection for the AR device can be reduced.

Embodiments of this application are illustrated below in conjunction with the accompanying drawings in the specification. The embodiments described herein are only used to illustrate and explain this application, and are not used to limit this application. In addition, the embodiments of this application and features in the embodiments may be combined with each other if there is no conflict.

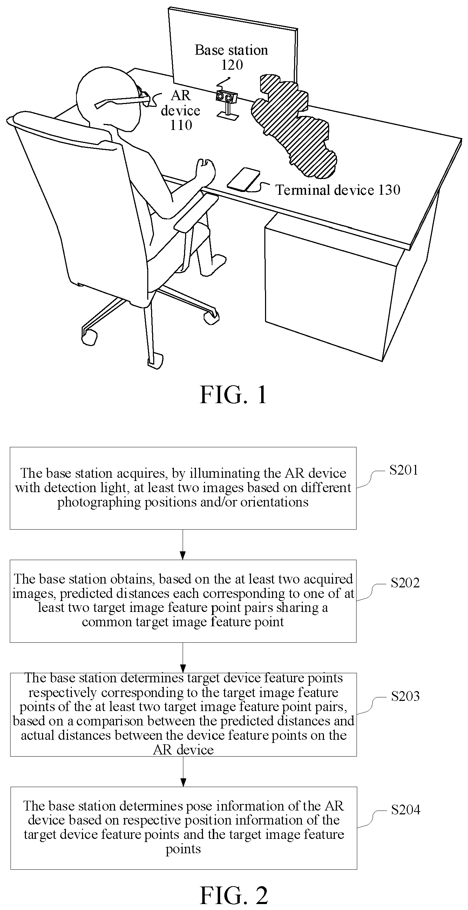

The scheme proposed in this application can be applied to 6-degree-of-freedom spatial pose detection of lightweight AR glasses, to realize the virtual-reality fusion application in some specific scenarios (e.g., an office scenario, a tabletop game scenario, etc.). An exemplary application scenario is shown in FIG. 1.

FIG. 1 is a schematic diagram of an application scenario according to an embodiment of this application. As shown in FIG. 1, the application scenario includes an AR device 110, a base station 120, and a terminal device 130.

The AR device includes, but is not limited to, a head-mounted AR device, an AR helmet device, etc.

All embodiments of the present disclosure are illustrated using an example where the AR device 110 is a head-mounted AR device, for example, may be lightweight AR glasses. The AR device includes an AR optical display module, which is configured to project and display a virtual image in reality, as shown by a shaded part in FIG. 1. In addition, the AR device also includes an Advanced RISC Machines System On Chip (ARM SOC) and a device feature point that can reflect light. For example, when light emitted by the base station is infrared light, the device feature point may be an infrared reflection point formed by an infrared fluorescent material. The AR device 110 is connected to a hotspot of the terminal device 130 via wireless fidelity (WI-FI), and performs local time synchronization with the base station 120 via a Network Time Protocol (NTP).

Other types of AR devices are also applicable to this application, and the light emitted by the base station and the material of the device feature point are merely illustrated as examples, and are not particularly limited in this application.

The base station 120 is a positioning base station, which includes a plurality of acquisition devices, e.g., a set of infrared binocular cameras; a light emission device, e.g., an infrared LED light; and an ARM SOC. An NTP local time server is deployed in the base station 120, and the base station 120 is connected to the Internet through a WI-FI hotspot of the terminal device 130 to synchronize global time.

The terminal device 130 provides the WI-FI hotspot for the AR device, so that the AR device 110 and the base station 120 can establish a network connection and local time of the base station is synchronized via the NTP protocol. The terminal device 130 includes, but is not limited to, a mobile phone, a tablet, a laptop, a desktop computer, an e-book reader, an intelligent voice interaction device, a smart home appliance, an in-vehicle terminal, etc.

The method for detecting a pose of an AR device in all embodiments of the present disclosure is executed by the base station 120. The base station 120 transmits infrared detection light to the AR device 110 through an infrared LED light, and at the same time, obtains, through an infrared binocular camera including two acquisition devices located at different photographing positions, two acquired images obtained by reflecting the infrared detection light by device feature points on the AR device 110. The base station 120 calculates respective predicted distances of at least two target image feature point pairs including a common target image feature point in an actual scenario based on two acquired images; and compares the predicted distances with the different actual distances between the device feature points on the AR device 110, to determine target device feature points respectively corresponding to the target image feature point pairs on the AR device 110. Finally, the base station 120 calculates relative position information of the AR device 110 relative to the base station 120 based on position information of the target device feature points in an AR device coordinate system and position information of the target image feature points in a base station coordinate system, thereby obtaining pose information of the AR device 110.

FIG. 1 is only an example, and the number of AR devices 110, the number of base stations 120, and the number of terminal devices 130 are not particularly limited in all embodiments of the present disclosure.

In addition, all embodiments of the present disclosure may be applied to various scenarios, including, but not limited to, cloud technology, artificial intelligence, intelligent transportation, assisted driving, etc.

The following describes the method for detecting a pose of an AR device provided by implementations of this application according to the application scenarios described above and with reference to the accompanying drawings.

FIG. 2 is an implementation flowchart of a method for detecting a pose of an AR device according to an embodiment of this application. The method is executed by, for example, a base station. As shown in FIG. 2, the method may include the following specific implementation processes.

S201: The base station acquires, by illuminating the AR device with detection light, at least two images based on different photographing positions and/or orientations of a photographing device, or an acquisition device disposed on the base station. There are many ways to illuminate the AR device with the detection light. For example, the photographing device may emit the detection light to the AR device. Alternatively, the detection light may reach the AR device after being refracted and/or reflected for at least one time.

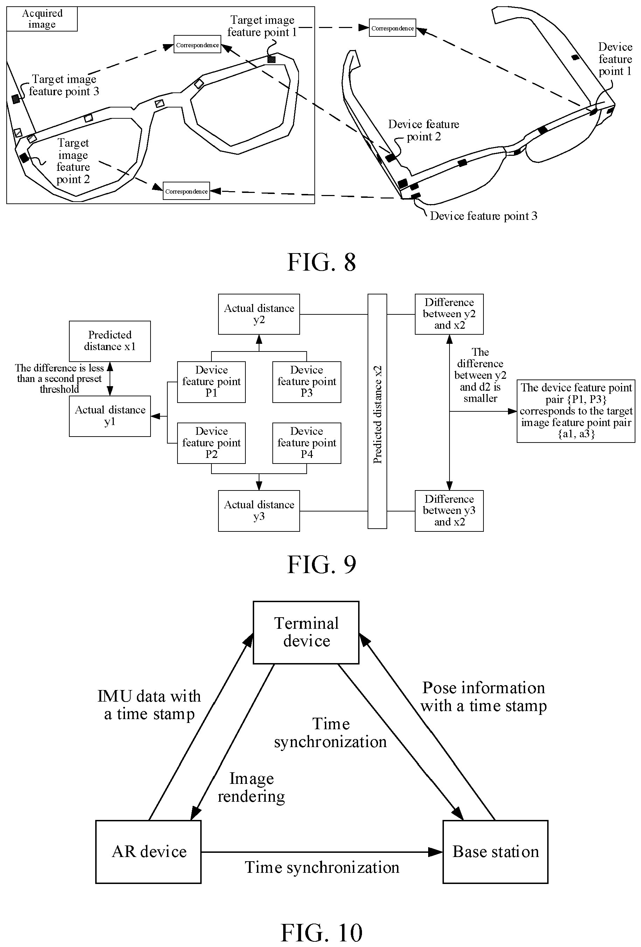

Each of the acquired images includes image feature points obtained by reflecting the detection light at device feature points on the AR device. The image feature points and the device feature points are in a one-to-one correspondence. As shown in FIG. 8, the base station may determine that the target image feature point 1, the target image feature point 2, and the target image feature point 3 in the acquired image respectively correspond to the device feature point 1, the device feature point 2, and the device feature point 3 on the AR device.

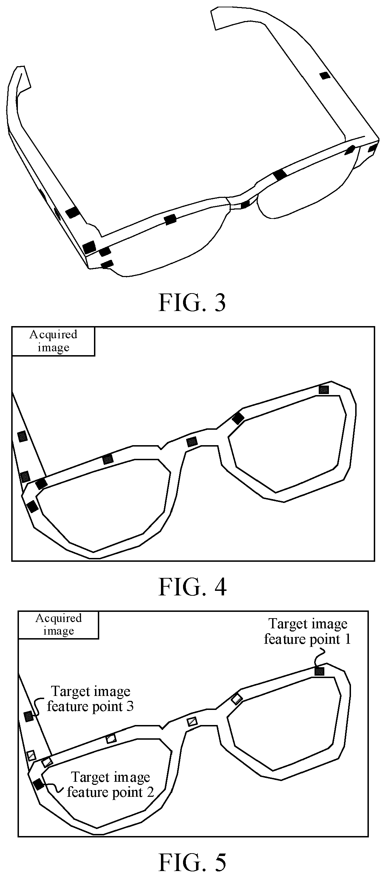

FIG. 3 is a schematic diagram of an AR device according to an embodiment of this application. As shown in FIG. 3, the AR device is lightweight AR glasses having a plurality of black dots thereon. The black dots are device feature points that can reflect light. For example, when light emitted by the base station is infrared light, the device feature point may be an infrared reflection point formed by an infrared fluorescent material. In other words, each device feature point on the AR device is formed by a material capable of reflecting infrared light.

The infrared LED light on the base station can emit the infrared light to the AR device, and at the same time, a plurality of acquisition devices located at different photographing positions on the base station photograph the AR device to obtain a plurality of acquired images.

Each of the acquired images is acquired based on an acquisition device located at one of the photographing positions. The acquisition device may be a camera or other image capture devices. Assuming that the acquisition devices are cameras, each acquisition device may be an independent photography device, or a plurality of acquisition devices may be located in the same photography device.

FIG. 4 is a schematic diagram of an acquired image according to an embodiment of this application. As shown in FIG. 4, an acquisition device on the base station photographs the AR device, to obtain an acquired image. The acquired image includes a plurality of image feature points each corresponding to a device feature point on the AR device.

The plurality of acquisition devices may be an infrared binocular camera (including two acquisition devices located at different photographing positions). The infrared binocular camera captures two acquired images. The two acquired images can reflect the status of reflection of the infrared light by the device feature points on the AR device. To reduce flickering and improve the quality of the acquired images, the control of on and off of an infrared LED array needs to be in strict synchronization with the exposure of the camera.

In addition, in this application, the base station emits infrared light, and the reflection of the infrared light by the AR device may be replaced by an infrared LED, i.e., an infrared LED is arranged on the AR device. In the following, an infrared binocular camera and infrared light are used as examples.

Infrared light consumes low power and is suitable for used in methods of determining the pose of the AR device by detecting infrared reflection. In addition, other light that can achieve the above effects are also applicable to this application, which will not be enumerated herein. The following uses infrared light as an example for description.

In an actual scenario, for example, an object A wears and turns on the AR device to prepare to project a virtual image, and the infrared LED light on the base station emits infrared light to the AR device. At the same time, the infrared binocular camera on the base station photographs the status of reflection of the device feature points on the AR device to obtain two acquired images.

S202: The base station obtains, based on the at least two acquired images, predicted distances each corresponding to one of at least two target image feature point pairs, the at least two target image feature point pairs sharing a common target image feature point. It should be noted that, the predicted distances each corresponding to one of at least two target image feature point pairs may be provided by the base station or a third-party device. The third-party device is not limited here.

In all embodiments of the present disclosure, each acquired image includes at least three image feature points (where the number of device feature points on the AR device is greater than three).

Using two acquired images as an example, after obtaining the acquired images, the base station first randomly selects, or selects based on a preset rule, at least three common target image feature points included in the two acquired images, and determines at least two target image feature point pairs based on the three target image feature points. In the embodiment, three common target image feature points are selected. The foregoing preset rule may indicate to select three image feature points having relatively large distances as target image feature points to reduce the error. "Including a common target image feature point" means that any two target image feature point pairs must include a same target image feature point. For example, an image feature point 1, an image feature point 2, and an image feature point 3 can form image feature point pairs {image feature point 1, image feature point 2}, {image feature point 1, image feature point 3} and {image feature point 2, image feature point 3}. {Image feature point 1, image feature point 2} and {image feature point 1, image feature point 3} both include the image feature point 1; {image feature point 1, image feature point 3} and {image feature point 2, image feature point 3} both include the image feature point 3; and {image feature point 1, image feature point 2} and {image feature point 2, image feature point 3} both include the image feature point 2.

In addition, the method for detecting a pose of an AR device proposed in this application can be implemented by selecting two of the three target image feature point pairs. The selection process may be random. For example, {image feature point 1, image feature point 2} and {image feature point 2, image feature point 3} are selected, {image feature point 1, image feature point 2} and {image feature point 1, image feature point 3} are selected, or {image feature point 2, image feature point 3} and {image feature point 1, image feature point 3} are selected.

Alternatively, two target image feature point pairs having a large distance difference between the image feature points may be selected. Alternatively, it is also feasible to perform a pose detection process for the AR device based on every two target image feature point pairs, and calculate a mean value of the obtained pose information. The specific implementation is not particularly limited in this application. The following mainly uses two target image feature point pairs as an example.

In addition to randomly selecting three target image feature points, three image feature points having relatively large distances may be selected as target image feature points to reduce the error. For example, if the acquired image includes four image feature points, namely, an image feature point 1, an image feature point 2, an image feature point 3, and an image feature point 4, all image feature point combinations including three image feature points can be determined: (image feature point 1, image feature point 2, image feature point 3), (image feature point 1, image feature point 2, image feature point 4), (image feature point 2, image feature point 3, image feature point 4), and (image feature point 1, image feature point 3, image feature point 4). The three image feature points having a largest sum of distances are determined as target image feature points. The specific implementation is not particularly limited in this application.

FIG. 5 is a schematic diagram of target image feature points according to an embodiment of this application. As shown in FIG. 5, in all embodiments of the present disclosure, there are eight image feature points in the acquired image, which are represented by black squares and slash squares in the figure. The sum of the distances between the image feature points represented by the three black squares is the largest, and the three image feature points are selected as a target image feature point 1, a target image feature point 2, and a target image feature point 3, respectively.

Then, based on information of three image feature points reflected in each of at least two acquired images, the base station determines predicted distances of the three image feature points in the real environment, i.e., predicts distances between device feature points corresponding to the three image feature points. The distances of the image feature points on the acquired image are two-dimensional, and the predicted distances are three-dimensional distances in the real environment.

If the number of acquired images is more than two, two acquired images may be randomly selected, or it is also feasible to determine the predicted distances for every two images and calculated a mean value of the determined predicted distances, etc. The specific implementation is not particularly limited in this application.

In one embodiment, the base station determines the respective predicted distances of the at least two target image feature point pairs based on distances of the at least two target image feature point pairs in each acquired image and calibration parameters configured for representing a position relationship between the at least two acquisition devices.

That is, after obtaining the distances of the at least two target image feature point pairs in each acquired image and the calibration parameters configured for representing the position relationship between the at least two acquisition devices, the base station may determine three-dimensional coordinates of the three target image feature points in the base station coordinate system based on the information, and further determine the predicted distances corresponding to the target image feature point pairs based on the three-dimensional coordinates. The purpose of this operation is to determine the device feature points corresponding to the target image feature points based on the predicted distances, i.e., determine a device feature point photographed by the acquisition device to obtain a target image feature point in the acquired image.

The origin of the base station coordinate system may be set at a center point of a camera in the infrared binocular camera. The specific implementation is not particularly limited in this application.

Specifically, for example, the base station selects two target image feature point pairs: {image feature point 1, image feature point 2} and {image feature point 1, image feature point 3}. The base station may predict three-dimensional coordinates of the image feature point 1, the image feature point 2, and the image feature point 3 in the base station coordinate system in the real environment based on distances between the image feature point 1 and the image feature point 2 on the two acquired images, distances between the image feature point 1 and the image feature point 3 on the two acquired images, and calibration parameters of the two acquisition devices on the infrared binocular camera, and then calculate a predicted distance of {image feature point 1, image feature point 2} and a predicted distance of {image feature point 1, image feature point 3} based on the three-dimensional coordinates.

In the above description, the calibration parameters of the two acquisition devices reflect the relative position relationship between the two acquisition devices, e.g., the distance between the two acquisition devices and a relative angle between photographing directions.

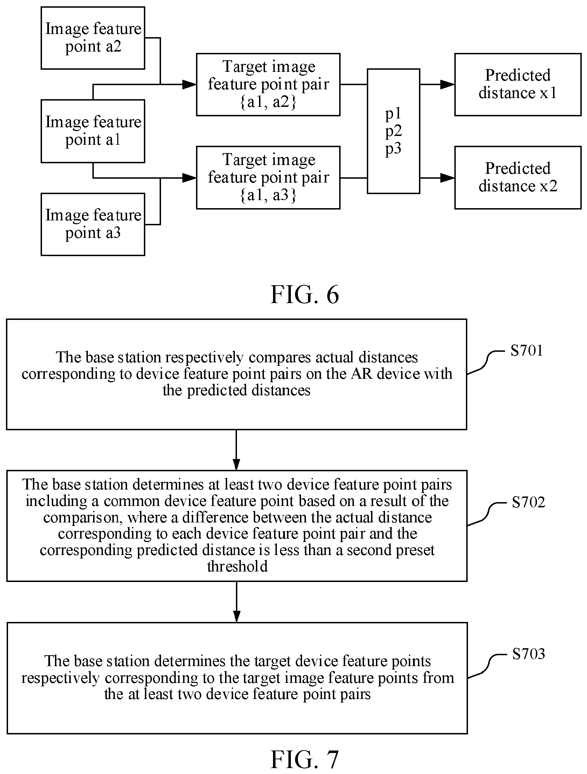

Based on the assumption in S201, FIG. 6 is a logic diagram of calculating predicted distances according to an embodiment of this application. As shown in FIG. 6, the base station selects image feature points a1, a2, and a3 as target image feature points in the acquired image, and determines two target image feature point pairs, namely, {a1, a2} and {a1, a3}. The base station respectively calculates coordinates p1, p2, and p3 of a1, a2 and a3 in the base station coordinate system based on distances between the three target image feature points in the two acquired images and the position relationship between the two cameras in the infrared binocular camera. The base station may further calculate a predicted distance x1 between a1 and a2 and a predicted distance x2 between a1 and a3 based on p1, p2, and p3.

S203: The base station determines target device feature points respectively corresponding to the target image feature points of the at least two target image feature point pairs, based on a comparison between the predicted distances and pre-determined distances between the device feature points on the AR device. There is a one-to-one correspondence between the target device feature points and the target image feature points. The pre-determined distances between the device features points on the AR device may be an actual distance between the device features points on the AR device, which is obtained by conducting a physical measurement on the AR device. Alternatively, the foregoing pre-determined distances between the device features points on the AR device may be a simulated distance, or a reference distance which is provided by a manufacturer. In the following embodiments of the present disclosure, the pre-determined distances between the device feature points on the AR device are described with the actual distance between the device feature points on the AR device as an example.

In the above description, the base station may call a positioning algorithm to identify the target device feature points corresponding to the target image feature points through spatial position analysis.

In addition, to realize the process of determining the target device feature points corresponding to the target image feature points through distance comparison, this application provides an arrangement mode of device feature point on the AR device.

In all embodiments of the present disclosure, the actual distance between any two device feature points on the AR device is different, and a difference between any two actual distances is distinguishable, i.e., a difference between any two actual distances is greater than a first preset threshold. This method can accelerate the determining of the target device feature points and simplify the algorithm.

In addition, the first preset threshold may also be set based on the resolution and the calibration parameters of the acquisition devices.

The difference of any two distances in this application is the absolute value of the difference, i.e., the difference is non-negative.

Based on this, for each predicted distance, the base station may compare the predicted distance with the actual distances to determine a device feature point pair corresponding to the corresponding target image feature point pair, and further determine a relationship between the target image feature points and the target device feature points in the target image feature point pair and the corresponding device feature point pair. FIG. 7 is a flowchart of determining target device feature points respectively corresponding to target image feature points according to an embodiment of this application. As shown in FIG. 7, the base station may perform the following operations.

S701: The base station respectively compares actual distances corresponding to device feature point pairs on the AR device with the predicted distances.

It is assumed that there are two target image feature point pairs, the predicted distances described above include a first predicted distance of one of the two target image feature point pairs (hereinafter referred to as a first target image feature point pair) and a second predicted distance of the other target image feature point pair (hereinafter referred to as a second target image feature point pair). The base station may successively determine two device feature point pairs respectively corresponding to the two target image feature point pairs, i.e., first determine a device feature point pair corresponding to one of the target image feature point pairs, and then determine a device feature point pair corresponding to the other target image feature point pair. Alternatively, the base station may simultaneously determine two device feature point pairs respectively corresponding to the two target image feature point pairs. The specific implementation is not particularly limited in this application.

S702: The base station determines at least two device feature point pairs including a common device feature point based on a result of the comparison. A difference between the actual distance corresponding to each device feature point pair and the corresponding predicted distance is less than a second preset threshold.

In the above description, the second preset threshold is not greater than the first preset threshold.

In all embodiments of the present disclosure, the base station determines two device feature points whose difference between the corresponding actual distance and the first predicted distance is less than the second preset threshold as a first device feature point pair corresponding to the first target image feature point pair.

Then, the base station searches for at least one other device feature point pair whose difference between the corresponding actual distance and the second predicted distance is less than the second preset threshold and that shares a common device feature point with the first device feature point pair.

For example, the base station obtains two target image feature point pairs, i.e., {image feature point 1, image feature point 2} and {image feature point 1, image feature point 3 }, a first predicted distance between the image feature point 1 and the image feature point 2 is d1, a second predicted distance between the image feature point 1 and the image feature point 3 is d2. The base station first searches for an actual distance close to the first predicted distance d1 among actual distances corresponding to device feature point pairs on the AR device, and determines that an actual distance D1 between a device feature point 1 and a device feature point 2 and the first predicted distance d1 satisfy a condition |*D*1 - *d*1| < *δ*, where |*D*1 *- d*1| is the difference between the actual distance D1 and the first predicted distance d1, and δ is the second preset threshold.

In all embodiments of the present disclosure, provided that the second preset threshold is far less than the first preset threshold, generally only one actual distance having a difference from the first predicted distance of less than the second preset threshold can be determined.

If the second preset threshold is less than or equal to the first preset threshold, and the second preset threshold does not greatly differ from the first preset threshold, there may be one or more actual distances having a difference from the first predicted distance of less than the second preset threshold.

In the above description, if there are a plurality of actual distances having a difference from the first predicted distance of less than the second preset threshold, the device feature point pair corresponding to the actual distance having the smallest difference from the first predicted distance may be selected as the device feature point pair corresponding to the target image feature point pair {image feature point 1, image feature point 2}.

For example, the difference between the actual distance between the device feature point 1 and the device feature point 2 and the first predicted distance is less than the second preset threshold, and is 0.05 cm, and a difference between an actual distance between a device feature point 5 and a device feature point 6 and the first predicted distance is less than the second preset threshold, and is 0.1 cm. In this case, {device feature point 1, device feature point 2} is selected as the device feature point pair corresponding to the target image feature point pair {image feature point 1, image feature point 2}.

Similarly, the base station searches for at least one actual distance close to the second predicted distance d2 among actual distances corresponding to device feature point pairs on the AR device. The at least one actual distance has a difference from the second predicted distance of less than the second preset threshold. Device feature point pairs respectively corresponding to the at least one actual distance are other device feature point pairs. Each of the other device feature point pairs must include the device feature point 1 or the device feature point 2. Finally, the base station determines a second device feature point pair corresponding to the second target image feature point pair from the at least one other device feature point pair.

S703: The base station determines the target device feature points respectively corresponding to the target image feature points from the at least two device feature point pairs.

Specifically, the base station determines a common device feature point in two device feature point pairs as a target device feature point corresponding to the common target image feature point in the corresponding two target image feature point pairs; determines the device feature point in the first device feature point pair other than the common device feature point as the target device feature point corresponding to the image feature point in the first target image feature point pair other than the common image feature point; and determine the device feature point in the second apparent feature point pair other than the common device feature point as the target device feature point corresponding to the image feature point in the second target image feature point pair other than the common image feature point.

That is, the base station needs to find the second device feature point pair from the at least one other device feature point pair as the device feature point pair corresponding to the target image feature point pair {image feature point 1, image feature point 3}. For example, the base station selects {device feature point 1, device feature point 3} as the device feature point pair corresponding to {image feature point 1, image feature point 3}, where an actual distance D2 between the device feature point 1 and the device feature point 3 and the second predicted distance d2 meet a condition |*D*2 *- d*2| <*δ.*

Then, since the determined two device feature point pairs both include the device feature point 1 and the two target image feature point pairs both include the image feature point 1, the device feature point 1 is determined as the target device feature point corresponding to the image feature point 1, the device feature point 2 in the device feature point pair {device feature point 1, device feature point 2} is determined as the target device feature point corresponding to the image feature point 2 in the corresponding target image feature point pair {image feature point 1, image feature point 2}, and the device feature point 3 in the device feature point pair {device feature point 1, device feature point 3} is determined as the target device feature point corresponding to the image feature point 3 in the corresponding target image feature point pair {image feature point 1, image feature point 3}.

That is, the first target image feature point pair is set to include a first target image feature point and a second target image feature point, and the second target image feature point pair is set to include the first target image feature point and a third target image feature point. If the common device feature point in the two device feature point pairs is a first device feature point in the first device feature point pair, the first device feature point is determined as a first target device feature point corresponding to the first target image feature point on the AR device, a second device feature point in the first device feature point pair is determined as a second target device feature point corresponding to the second target image feature point on the AR device, and a third device feature point in the second device feature point pair is determined as a third target device feature point corresponding to the third target image feature point on the AR device.

To sum up, in the above examples, the device feature point 1 is the first device feature point, the device feature point 2 is the second device feature point, the device feature point 3 is the third device feature point, the image feature point 1 corresponds to the device feature point 1, the image feature point 2 corresponds to the device feature point 2, and the image feature point 3 corresponds to the device feature point 3.

FIG. 8 is a diagram showing a correspondence between target image feature points and target device feature points according to an embodiment of this application. As shown in FIG. 8, the base station may determine based on the above method that the target image feature point 1, the target image feature point 2, and the target image feature point 3 in the acquired image respectively correspond to the device feature point 1, the device feature point 2, and the device feature point 3 on the AR device.

For example, the base station selects {device feature point 2, device feature point 4} as the device feature point pair corresponding to {image feature point 1, image feature point 3}, where an actual distance D3 between the device feature point 2 and the device feature point 4 and the second predicted distance d2 meet a condition |*D*3 - *d*2| <*δ*.

Finally, since the determined two device feature point pairs both include the device feature point 2 and the two target image feature point pairs both include the image feature point 1, the device feature point 2 is determined as the target device feature point corresponding to the image feature point 1, the device feature point 1 in the device feature point pair {device feature point 1, device feature point 2} is determined as the target device feature point corresponding to the image feature point 2 in the corresponding target image feature point pair {image feature point 1, image feature point 2}, and the device feature point 4 in the device feature point pair {device feature point 2, device feature point 4} is determined as the target device feature point corresponding to the image feature point 3 in the corresponding target image feature point pair {image feature point 1, image feature point 3}.

That is, if the common device feature point in the two device feature point pairs is a second device feature point in the first device feature point pair, the second device feature point is determined as a second target device feature point corresponding to the first target image feature point on the AR device, a first device feature point in the first device feature point pair is determined as a first target device feature point corresponding to the second target image feature point on the AR device, and a third device feature point in the second device feature point pair is determined as a third target device feature point corresponding to the third target image feature point on the AR device.

To sum up, in the above examples, the device feature point 1 is the first device feature point, the device feature point 2 is the second device feature point, the device feature point 4 is the third device feature point, the image feature point 1 corresponds to the device feature point 2, the image feature point 2 corresponds to the device feature point 1, and the image feature point 3 corresponds to the device feature point 4.

In addition, in the above process, the base station needs to find one other device feature point pair from the at least one other device feature point pair as the second device feature point pair corresponding to the second target image feature point pair. The process may include into the following two cases.

Case 1: If one other device feature point pairs exists, determine the other device feature point pair as the second device feature point pair corresponding to the second target image feature point pair.

Case 2: If a plurality of other device feature point pairs exist, select one of the plurality of other device feature point pairs as the second device feature point pair corresponding to the second target image feature point pair based on a relationship between the actual distances of the plurality of other device feature point pairs, such as how large or small the differences are between the different distances.

For Case 1, the base station only needs to determine the one other device feature point pair as the second device feature point pair corresponding to the second target image feature point pair {image feature point 1, image feature point 3 }.

For Case 2, there are a plurality of other device feature point pairs. Regardless of whether the other device feature point pairs all include the first device feature point, all include the second device feature point, or partly include the first device feature point and partly include the second device feature point,
and considering that there can only be one device feature point pair corresponding to the second target image feature point pair and that the difference between the actual distance corresponding to the device feature point pair and the second predicted distance should be as small as possible, in all embodiments of the present disclosure, the base station determines the other device feature point pair whose difference between the corresponding actual distance and the second predicted distance is the smallest as the second device feature point pair corresponding to the second target image feature point pair.

Then, for example, the base station finds two other device feature point pairs: a first other device feature point pair including the first device feature point and the third device feature point, and a second other device feature point pair including the second device feature point and a fourth device feature point.

If an actual distance corresponding to the first other device feature point pair is less than an actual distance corresponding to the second other device feature point pair, the first device feature point is determined as a point corresponding to the first target image feature point, the second device feature point in the previously determined first device feature point pair corresponding to the first target image feature point pair is determined as a point corresponding to the second target image feature point, and the third device feature point in the first other device feature point pair is determined as a point corresponding to the third target image feature point.

If the actual distance corresponding to the second other device feature point pair is less than the actual distance corresponding to the first other device feature point pair, the second device feature point is determined as a point corresponding to the first target image feature point, the first device feature point in the previously determined first device feature point pair is determined as a point corresponding to the second target image feature point, and the fourth device feature point in the second other device feature point pair is determined as a point corresponding to the third target image feature point.

For example, after determining that {device feature point 1, device feature point 2} corresponds to {image feature point 1, image feature point 2}, the base station finds two other device feature point pairs that both have a difference from the distance d2 of {image feature point 1, image feature point 3} of less than the second preset threshold. It is assumed that the two other device feature point pairs are {device feature point 1, device feature point 3} and {device feature point 2, device feature point 4}, a distance corresponding to {device feature point 1, device feature point 3} is D2, and a distance corresponding to {device feature point 2, device feature point 4} is D3. If |*D*2 - *d*2| < |*D*3 - *d*2| *< δ*, {device feature point 1, device feature point 3} is determined as the device feature point pair corresponding to {image feature point 1, image feature point 3}. If |*D*3 - *d*2| < |*D2* - d2| *< δ*, {device feature point 2, device feature point 4} is determined as the device feature point pair corresponding to {image feature point 1, image feature point 3}.

In addition, another method of determining the target device feature points corresponding to the target image feature points may also be used. In this method, after determining that {device feature point 1, device feature point 2} corresponds to {image feature point 1, image feature point 2}, the base station finds, from other device feature points on the AR device, a device feature point whose distance from the device feature point 1 differs from the second predicted distance by less than the second preset threshold. If there are a plurality of device feature points whose distance from the device feature point 1 differs from the second predicted distance by less than the second preset threshold, the device feature point with the smallest difference is selected. For example, the base station finally determines that the difference between the distance between the device feature point 3 and the device feature point 1 and the second predicted distance is the smallest and is less than the second preset threshold. Further, the base station finds a device feature point whose distance from the device feature point 2 differs from the second predicted distance by less than the second preset threshold. If there are a plurality of device feature points whose distance from the device feature point 2 differs from the second predicted distance by less than the second preset threshold, the device feature point with the smallest difference is selected. For example, the base station finally determines that the difference between the distance between the device feature point 4 and the device feature point 2 and the second predicted distance is the smallest and is less than the second preset threshold.

The subsequent process is the same as the above method, i.e., the difference between the distance between the device feature point 3 and the device feature point 1 is compared with the second predicted distance, and the difference between the distance between the device feature point 4 and the device feature point 2 is compared with the second predicted distance, to determine whether the device feature point pair corresponding to {image feature point 1, image feature point 3} is {device feature point 1, device feature point 3} or {device feature point 2, device feature point 4}.

In fact, the process is to further determine whether the device feature point 1 corresponds to the image feature point 1 or the image feature point 2 on the basis of determining that {device feature point 1, device feature point 2} corresponds to {image feature point 1, image feature point 2}. Finally, based on the values of the differences between the actual distances respectively corresponding to {device feature point 1, device feature point 3} and {device feature point 2, device feature point 4} and the second predicted distance, the target device feature points respectively corresponding to the target image feature point (i.e., the image feature point 1, the image feature point 2, and the image feature point 3) are finally determined.

"At least two device feature point pairs including a common device feature point" described in S702 of this application means that there may be more than two device feature point pairs corresponding to an actual distance that differs from the corresponding predicted distance by less than the second preset threshold. For example, after a device feature point pair corresponding to one target image feature point pair is determined, a device feature point pair corresponding to another target image feature point pair is determined. When a plurality of other device feature point pairs whose difference between the corresponding actual distance and the second predicted distance is less than the second preset threshold are found, each of the other device feature point pairs and the first device feature point pair corresponding to the first target image feature point pair include a common device feature point, and the "common device feature points" in these other device feature points may be the same or different.

For example, when the first device feature point pair is {device feature point 1, device feature point 2}, the other device feature point pairs may all include the device feature point 1 in the first device feature point pair, may all include the device feature point 2 in the first device feature point pair, or may partly include the device feature point 1 in the first device feature point pair and partly include the device feature point 2 in the first device feature point pair.

Based on the assumption in S202, FIG. 9 is a logic diagram of determining device feature points corresponding to target image feature points according to an embodiment of this application. As shown in FIG. 9, after calculating the predicted distance x1 between a1 and a2 and the predicted distance x2 between a1 and a3, the base station determines a device feature point pair {P1, P2} based on the predicted distance x1 between a1 and a2 and the distances corresponding to the device feature point pairs. An actual distance y1 of the device feature points P1 and P2 on the AR device is closer to x1 than an actual distance between any other two device feature points, and |x1 - y1| < δ is satisfied, where δ is the second preset threshold. In this case, the device feature point pair {P1, P2} corresponds to the target image feature point pair {a1, a2}.

Then, the base station determines a device feature point P3 whose distance from the device feature point P1 is closest to x2 and a device feature point P4 whose distance from the device feature point P2 is closest to x2. For example, a difference between a distance y2 between P1 and P3 and x2 is less than the second preset threshold, and a difference between a distance y3 between P2 and P4 and x2 is also less than the second preset threshold. The base station compares the difference between y2 and x2 with the difference between y3 and x2, and determines that the difference between y2 and x2 is smaller. In this case, the device feature point pair {P1, P3} corresponds to the target image feature point pair {a1, a3}.

Further, the base station determines that the target image feature point a1 corresponds to the device feature point P1, the target image feature point a2 corresponds to the device feature point P2, and the target image feature point a3 corresponds to the device feature point P3.

S204: The base station determines pose information of the AR device based on respective position information of the target device feature points and the target image feature points. The position information of the target device feature points is device-side position information. The position information of the target image feature points is image-side position information.

For example, the base station determines relative position information of the AR device with respect to a base station based on position information of the target device feature points in an AR device coordinate system and position information of the target image feature points in a base station coordinate system; and determine the relative position information as the pose information of the AR device.

After determining the target device feature points respectively corresponding to the target image feature points, the base station may obtain three-dimensional coordinates of the target device feature points in the AR device coordinate system, and then determine a three-dimensional pose T₀ of the AR device coordinate system relative to the base station coordinate system based on the three-dimensional coordinates of the target image feature points in the base station coordinate system. The three-dimensional pose T₀ is the pose information of the AR device, and is specifically expressed as:
${T}_{0} = \left[\begin{matrix}R & L \\ 0 & 1\end{matrix}\right]$, where R is a rotation matrix reflecting an angular relationship between the AR device coordinate system and the base station coordinate system, and L is a translation matrix reflecting the distance between the AR device coordinate system and the base station coordinate system. The rotation matrix needs to meet the following condition: $R ′ R = I , \left|R\right| = 1$
where I is an identity matrix.

Apparently, the pose information T₀ of the AR device is 6-degree-of-freedom pose data.

Then, if each acquired image includes at least three image feature points, i.e., each acquired image includes three or more image feature points, T₀ may be adjusted by using candidate image feature points other than the target image feature points. Nonlinear optimization is performed using T₀ as initial pose information to obtain final pose information T₁.

In all embodiments of the present disclosure, the base station predicts reference position information of at least one candidate device feature point other than the target device feature points in a base station coordinate system based on the pose information and position information of the at least one candidate device feature point in an AR device coordinate system; predicts predicted position information of the at least one candidate device feature point in the AR device coordinate system based on the reference position information, calibration parameters configured for representing a position relationship between the acquisition devices, and the pose information; and finally adjusts the pose information respectively based on a difference between the position information of the at least one candidate device feature point each in the AR device coordinate system and the corresponding predicted position information.

In the above description, for each candidate device feature point other than the target device feature points on the AR device, the base station may calculate coordinates of the candidate device feature point in the base station coordinate system (i.e., reference position information) based on T₀ and the coordinates of the candidate device feature point in the AR device coordinate system. Then, based on the reference position information, calibration parameters of the infrared binocular camera, and T₀, the base station predicts coordinates of the candidate device feature point in the AR device coordinate system (i.e., predicted position information).

In one method of obtaining the predicted position information, the base station predicts a feature point position of the at least one candidate device feature point each in the acquired image based on the reference position information and the calibration parameters configured for representing the position relationship between the acquisition devices; for each feature point position, determines the image feature point whose distance between the feature point position is within a preset range as a candidate image feature point corresponding to the candidate device feature point; and respectively predicts the predicted position information of the corresponding candidate device feature points in the AR device coordinate system based on position information of at least one candidate image feature point in the base station coordinate system and the pose information.

In S202, the base station calculates the three-dimensional coordinates of three target image feature points in the base station coordinate system based on the calibration parameters and the distances of the at least two target image feature point pairs in each acquired image. In S204, the calculation process can be applied in reverse. For each candidate device feature point, based on reference position information of the candidate device feature point and the calibration parameters, a position of the candidate device feature point in the acquired image, i.e., a feature point position of the candidate device feature point, may be calculated. This is equivalent to predicting, after assuming that a candidate device feature point is captured in an acquired image, where a candidate image feature point corresponding to the candidate device feature point should be roughly located in the image. The purpose of this operation is to subsequently find the candidate image feature point corresponding to the candidate device feature point in the acquired image.

Then, the base station projects the predicted feature point position into the acquired image, searches for an image feature point closest to the feature point position, and determines the image feature point as a candidate image feature point corresponding to the candidate device feature point, where a distance between an actual position of the candidate image feature point on the acquired image and the feature point position should be less than 5 pixels.

Then, the base station determines to predict again the predicted position information of the corresponding candidate device feature point in the AR device coordinate system based on the coordinates of the candidate image feature point in the base station coordinate system and the pose information.

The base station may determine final pose information T₁ based on the differences between the predicted position information and the actual coordinates of the corresponding candidate device feature points in the AR device coordinate system. The pose information T₁ corresponds to a minimum sum of the differences between the predicted position information of the candidate device feature points and the real coordinates of the candidate device feature points in the AR device coordinate system and the differences between the predicted position information of the target device feature points and the real coordinates of the target device feature points in the AR device coordinate system. Specifically, the following formula may be used: ${min}_{{T}_{1}} {\sum }_{i} \left|{P}_{i}-{T}_{1}{p}_{i}\right|$
where ${T}_{1} = \left[\begin{matrix}{R}_{1} & {L}_{1} \\ 0 & 1\end{matrix}\right]$, and *R*₁'*R*₁ = *I*, |*R*₁| = 1.

The above formula is based on a least squares optimization algorithm, where *R*₁ is a rotation matrix, *L*₁ is a translation matrix, *Pᵢ* is actual coordinates of a device feature point i in the AR device coordinate system, *pᵢ* is coordinates of an image feature point i corresponding to the device feature point i in the base station coordinate system, and *T*₁*pᵢ* is predicted position information of the device feature point i. The device feature point i is a candidate device feature point or a target device feature point.

In addition, it can be seen that in the above formula, when the pose information is T₀, which is calculated based on the coordinates of the target image feature points corresponding to the target device feature points in the base station coordinate system and the real coordinates of the target device feature points in the AR device coordinate system, the difference between the predicted position information of the target device feature points and the real coordinates of the target device feature points in the AR device coordinate system is 0.

Based on the assumption in S203, after determining that the target image feature point a1 corresponds to the device feature point P1, the target image feature point a2 corresponds to the device feature point P2, and the target image feature point a3 corresponds to the device feature point P3, the base station calculates the pose information T₀ of the AR device based on the coordinates of the target image feature points a1, a2, and a3 in the base station coordinate system and the coordinates of the device feature points P1, P2, and P3 in the AR device coordinate system.

In addition, the base station further finds candidate image feature points a5 and a6 corresponding to the candidate device feature points P5 and P6 other than the device feature points P1, P2, and P3, where the candidate image feature points a5 and a6 are visible in the acquired image. Based on the coordinates of the candidate image feature points a5 and a6 in the base station coordinate system and the calibration parameters of the infrared binocular camera, predicted position information of the candidate device feature points P5 and P6 corresponding to the candidate image feature points a5 and a6 that is predicted by the base station in the AR device coordinate system is obtained. The predicted position information is compared with the actual coordinates of the corresponding candidate device feature points in the AR device coordinate system to adjust T₀ to finally obtain pose information T₁. The pose information T₁ corresponds to a minimum sum of the differences between the predicted position information of the candidate device feature points P5 and P6 and the real coordinates of the candidate device feature points P5 and P6 in the AR device coordinate system and the differences between the predicted position information of the device feature points P1, P2, and P3 and the real coordinates of the target device feature points P1, P2, and P3 in the AR device coordinate system.

FIG. 10 is a diagram showing interaction between an AR device, a base station, and a terminal device according to an embodiment of this application. After obtaining the pose information T₁, the base station may add a time stamp to the 6-degree-of-freedom pose information, and send the pose information T₁ with the time stamp to the terminal device through WI-FI The AR device may also measure data of an Inertial Measurement Unit (IMU) thereof and send the IMU data with a time stamp to the terminal device. The terminal device renders an image based on the pose information T₁ and the IMU data, and sends the rendered image to the AR device. In addition, the terminal device also needs to maintain time synchronization with the base station, and at the same time, the base station maintains time synchronization with the AR device.

The IMU may be a 6-axis sensor, which may include a 3-axis gyroscope and a 3-axis accelerometer. The gyroscope measures an angular velocity (degrees of freedom of rotation) about each axis, i.e., an angle in degrees of rotation per second based on this trend. The accelerometer measures an acceleration (degrees of freedom of movement) along each axis. The IMU data may be used to predict a pose of the AR device at a next moment based on the current movement velocity, acceleration, and the like of the AR device.

In addition, the AR device may send the IMU data to the terminal device via a Bluetooth Low Energy (BLE) protocol, to further reduce the power consumption of communication.

A specific rendering process of the terminal device may be as follows. The terminal device merges the pose information uploaded by the base station and the IMU data uploaded by the AR device, predicts a rendering time and an image transmission time, forward predicts a virtual image of the next moment based on the current moment and the predicted rendering time and image transmission time before the next moment arrives, renders a correct three-dimensional pose, and displays the rendering result to the AR device through WI-FI for display.

The method proposed in this application can greatly reduce the requirements on the computing power and power consumption of the AR device. Generally, the power consumption of an inside-out pose detection scheme for a head-mounted AR device is 1.5 w or more. In this application, only power consumption of WI-FI transmission is involved. The average power consumption after optimization is about 200 mw to 500 mw. In addition, the AR device in this application may be lightweight AR glasses without any additional electronic component or circuit, so that the system design is simplified.

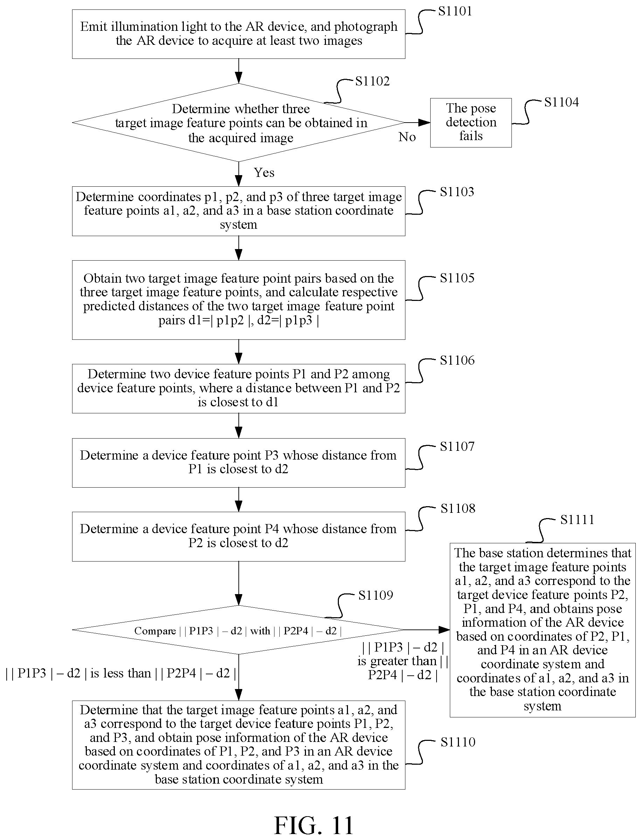

FIG. 11 is a flowchart of a specific implementation of another method for detecting a pose of an AR device according to an embodiment of this application. The method may include the following specific implementation process.

S1101: A base station emits detection light, e.g., illumination light, to the AR device, and photographs the AR device to obtain at least two acquired images.

S1102: The base station determines whether three target image feature points can be obtained in the acquired image. If yes, S1103 is executed. Otherwise, S1104 is executed.

S1103: The base station determines coordinates p1, p2, and p3 of three target image feature points a1, a2, and a3 in a base station coordinate system.

S1104: The pose detection fails.

S1105: The base station obtains two target image feature point pairs {a1, a2} and {a1, a3} based on the three target image feature points, and calculates respective predicted distances d1=| p1p2 | and d2=| p1p3 | of the two target image feature point pairs.

S1106: The base station determines two device feature points P1 and P2 among device feature points, where a distance between P1 and P2 is closest to d1.

S1107: The base station determines a device feature point P3 whose distance from P1 is closest to d2.

S1108: The base station determines a device feature point P4 whose distance from P2 is closest to d2.

In a specific implementation, the difference between the distance between P1 and P3 in S1107 and d2 may be less than a second preset threshold, and the difference between P2 and P4 in S1108 and d2 may be less than the second preset threshold.

If neither S1107 nor S1108 can find a device feature point pair whose difference from d2 is less than the second preset threshold, the positioning fails. If only one of S1107 and S1108 successfully finds a device feature point pair whose difference from d2 is less than the second preset threshold, the device feature point pair is directly determined as a device feature point pair corresponding to the target image feature point pair {a1, a3}.

S1109: The base station compares | | P1P3 | - d2 | with | | P2P4 | - d2 |. If | | P1P3 | - d2 | is less than | | P2P4 | - d2 |, S1110 is executed. Otherwise, S1111 is executed.

S1110: The base station determines that the target image feature points a1, a2, and a3 correspond to the target device feature points P1, P2, and P3, and obtains pose information of the AR device based on coordinates of P1, P2, and P3 in an AR device coordinate system and coordinates of a1, a2, and a3 in the base station coordinate system.

S1111: The base station determines that the target image feature points a1, a2, and a3 correspond to the target device feature points P2, P1, and P4, and obtains pose information of the AR device based on coordinates of P2, P1, and P4 in an AR device coordinate system and coordinates of a1, a2, and a3 in the base station coordinate system.

The flowchart listed above is merely a simple example. S1107 and S1108 may be executed in a reversed order or simultaneously. The specific implementation is not particularly limited in this application.

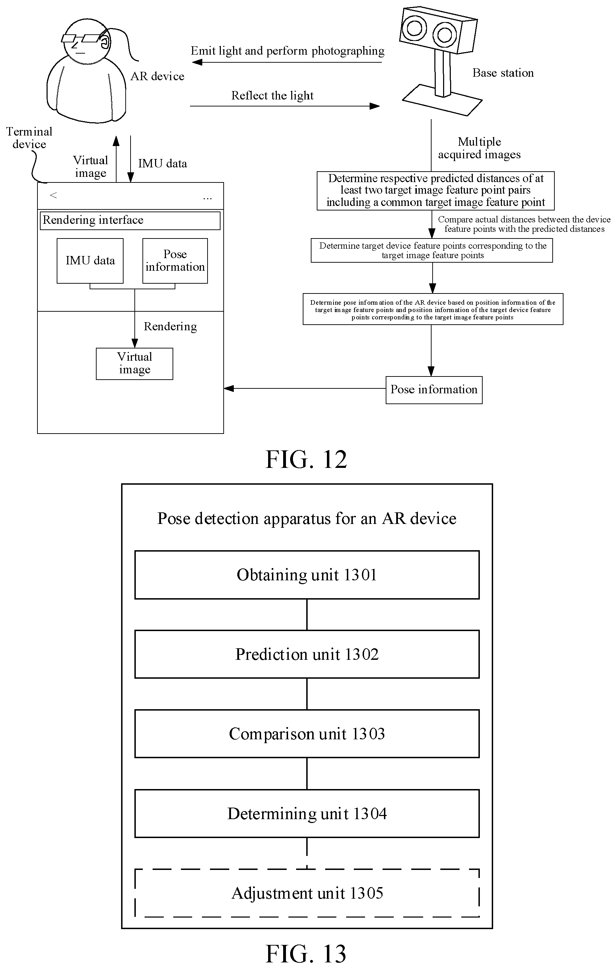

FIG. 12 is a logic diagram showing interaction between an AR device, a base station, and a terminal device according to an embodiment of this application. As shown in FIG. 12, the base station emits light to the AR device. Device feature points on the AR device reflect the light. At the same time, the base station photographs the device feature points to obtain multiple acquired images. Then, the base station determines respective predicted distances of at least two target image feature points including a common target image feature point, and determines target device feature points respectively corresponding to the target image feature points based on the predicted distances and actual distances between the device feature points. Finally, the base station determines pose information of the AR device based on position information of the target image feature points and position information of the target device feature points corresponding to the target image feature points, and sends the pose information to the terminal device. The AR device obtains IMU data thereof and send the IMU data to the terminal device. The terminal device renders a virtual image based on the pose information of the AR device and the IMU data, and after completing the rendering, sends the rendered image to the AR device for display.

Based on the same inventive concept, an embodiment of this application further provides a pose detection apparatus for an AR device. FIG. 13 is a schematic structural diagram of a pose detection apparatus for an AR device. As shown in FIG. 13, the apparatus may include:
an obtaining unit 1301, configured to obtain, by emitting detection light to the AR device, at least two acquired images based on different photographing positions, each of the acquired images including image feature points obtained by reflecting the detection light based on device feature points on the AR device;
a prediction unit 1302, configured to determine respective predicted distances of at least two target image feature point pairs including a common target image feature point based on the at least two acquired images;
a comparison unit 1303, configured to determine target device feature points respectively corresponding to the target image feature points on the AR device based on a comparison result between the predicted distances and actual distances between the device feature points on the AR device; and
a determining unit 1304, configured to determine pose information of the AR device based on respective position information of the target device feature points and the target image feature points.

In all embodiments of the present disclosure, each of the acquired images is acquired based on an acquisition device located at one of the photographing positions. The prediction unit 1302 is further configured to:
determine the respective predicted distances of the at least two target image feature point pairs based on distances of the at least two target image feature point pairs in each acquired image and calibration parameters configured for representing a position relationship between the acquisition devices.

In all embodiments of the present disclosure, the actual distance between any two device feature points is different, and a difference between any two actual distances is greater than a first preset threshold.

In all embodiments the present disclosure, the comparison unit 1303 is further configured to:
respectively compare actual distances corresponding to device feature point pairs on the AR device with the predicted distances;
determine at least two device feature point pairs including a common device feature point based on a result of the comparison, where a difference between the actual distance corresponding to each device feature point pair and the corresponding predicted distance is less than a second preset threshold; and determine the target device feature points respectively corresponding to the target image feature points from the at least two device feature point pairs, where the second preset threshold is not greater than the first preset threshold.

In all embodiments of the present disclosure, the predicted distances include a first predicted distance of a first target image feature point pair and a second predicted distance of a second target image feature point pair in the at least two target image feature point pairs.

The comparison unit 1303 is further configured to:
determine two device feature points whose difference between the corresponding actual distance and the first predicted distance is less than the second preset threshold as a first device feature point pair corresponding to the first target image feature point pair;
search for at least one other device feature point pair whose difference between the corresponding actual distance and the second predicted distance is less than the second preset threshold and that shares a common device feature point with the first device feature point pair; and
determine the target device feature points respectively corresponding to the target image feature points from device feature points respectively included in one device feature point pair and at least one other device feature point pair.

In all embodiments of the present disclosure, the comparison unit 1303 is further configured to:
determine a second device feature point pair corresponding to the second target image feature point pair from the at least one other device feature point pair;
determine the common device feature point as the target device feature point corresponding to the common target image feature point;
determine the device feature point in the first device feature point pair other than the common device feature point as the target device feature point corresponding to the image feature point in the first target image feature point pair other than the common image feature point; and
determine the device feature point in the second apparent feature point pair other than the common device feature point as the target device feature point corresponding to the image feature point in the second target image feature point pair other than the common image feature point.

In all embodiments of the present disclosure, the comparison unit 1303 is further configured to:
if one other device feature point pairs exists, determine the other device feature point pair as the second device feature point pair corresponding to the second target image feature point pair; and
if a plurality of other device feature point pairs exist, select one of the plurality of other device feature point pairs as the second device feature point pair corresponding to the second target image feature point pair based on a value relationship between the actual distances of the plurality of other device feature point pairs.

In all embodiments of the present disclosure, the comparison unit 1303 is further configured to:
determine the other device feature point pair whose difference between the corresponding actual distance and the second predicted distance is the smallest as the second device feature point pair corresponding to the second target image feature point pair.

In all embodiments of the present disclosure, the determining unit 1304 is further configured to:
determine relative position information of the AR device with respect to a base station based on position information of the target device feature points in an AR device coordinate system and position information of the target image feature points in a base station coordinate system; and
determine the relative position information as the pose information of the AR device.

In all embodiments of the present disclosure, each of the acquired images is acquired based on an acquisition device located at one of the photographing positions; and the pose detection apparatus for an AR device further includes:
an adjustment unit 1305, configured to predict reference position information of at least one candidate device feature point other than the target device feature points in a base station coordinate system based on the pose information and position information of the at least one candidate device feature point in an AR device coordinate system;
predict predicted position information of the at least one candidate device feature point in the AR device coordinate system based on the reference position information, calibration parameters configured for representing a position relationship between the at least two acquisition devices, and the pose information; and
adjust the pose information respectively based on a difference between the position information of the at least one candidate device feature point each in the AR device coordinate system and the corresponding predicted position information.

In all embodiments of the present disclosure, the adjustment unit 1305 is further configured to:
predict a feature point position of the at least one candidate device feature point each in the acquired image based on the reference position information and the calibration parameters configured for representing the position relationship between the at least two acquisition devices;
for each feature point position, determine the image feature point whose distance between the feature point position is within a preset range as a candidate image feature point corresponding to the candidate device feature point; and
respectively predict the predicted position information of the corresponding candidate device feature points in the AR device coordinate system based on position information of at least one candidate image feature point in the base station coordinate system and the pose information.

In all embodiments of the present disclosure, each device feature point on the AR device is formed by a material capable of reflecting infrared light.

For the convenience of description, the above parts are divided into modules (or units) based on their functions and are separately described. Of course, the functions of the modules (or units) may be implemented in one or more software or hardware during the implementation of this application.

After the method and apparatus for detecting a pose of an AR device according to the embodiments of this application are introduced, an electronic device according to another embodiment of this application is introduced below.

The aspects of this application may be implemented as a system, method, or program product. Therefore, the aspects of this application may be embodied in the following forms: a hardware-only implementation, a software-only implementation (including firmware, microcode, etc.), or an implementation using a combination of hardware and software, which may be collectively referred to herein as "circuit", "module", or "system".

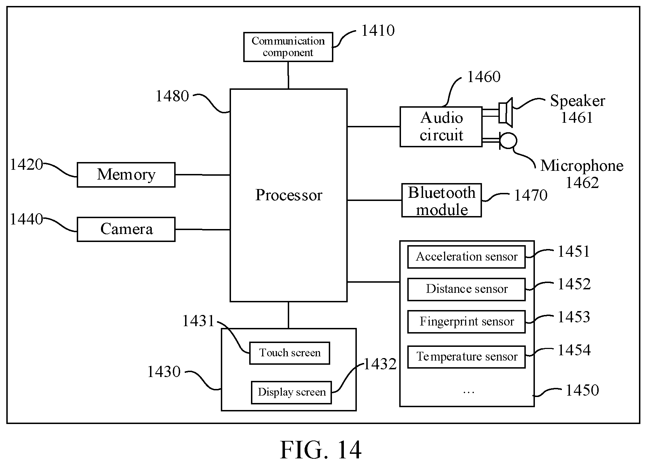

Based on the same inventive concept as the above method embodiments, an embodiment of this application further provides an electronic device. In all embodiments of the present disclosure, the electronic device may be a terminal device 130 shown in FIG. 1. In all embodiments of the present disclosure, as shown in FIG. 14, the structure of the electronic device may include a communication component 1410, a memory 1420, a display unit 1430, a camera 1440, a sensor 1450, an audio circuit 1460, a Bluetooth module 1470, a processor 1480, and other components.

The communication component 1410 is configured to communicate with a server. In all embodiments of the present disclosure, the communication component may include a WI-FI module. The WI-FI module belongs to a short-distance wireless transmission technology. The electronic device enables an object (e.g., a user) to send and receive information through the WI-FI module.

The memory 1420 may be configured to store a software program and data. The processor 1480 performs various functions and data processing of the terminal device 130 by running the software program or data stored in the memory 1420. The memory 1420 stores an operating system that enables the terminal device 130 to run. The memory 1420 in this application may store the operating system and various applications, and may also store a computer program for executing the method for detecting a pose of an AR device according to all embodiments of the present disclosure.

The display unit 1430 may be configured to display a graphical user interface (GUI) of information input by or provided to an object and various menus of the terminal device 130. Specifically, the display unit 1430 may include a display screen 1432 arranged on a front side of the terminal device 130. The display unit 1430 may be configured to display a rendering interface and the like in all embodiments of the present disclosure.

The display unit 1430 may also be configured to receive input numerical or character information and generate a signal input related to object setting and function control of the terminal device 130. Specifically, the display unit 1430 may include a touch screen 1431 arranged on the front side of the terminal device 130, which can receive a touch operation performed on or near the object, e.g., clicking a button, dragging a scrolling box, etc.

The touch screen 1431 may be laid on the display screen 1432, or the touch screen 1431 may be integrated with the display screen 1432 to achieve the input and output functions of the terminal device 130, which may be referred to as a touch display after integration. The display unit 1430 in this application may display the applications and corresponding operations.

The camera 1440 may be configured to capture a still image. The object may post the image captured by the camera 1440 through an application. The number of cameras 1440 may be one or more. The object generates an optical image through a lens and projects the optical image to a photosensitive element. The photosensitive element converts the optical signal to an electrical signal, and then passes the electrical signal to the processor 1480 for conversion to a digital image signal.

The terminal device may further include at least one sensor 1450, e.g., an accelerometer sensor 1451, a distance sensor 1452, a fingerprint sensor 1453, and a temperature sensor 1454. The terminal device may be further equipped with a gyroscope, a barometer, a hygrometer, a thermometer, an infrared sensor, a light sensor, a motion sensor, and other sensors.

The audio circuit 1460, a speaker 1461, and a microphone 1462 can provide audio interfaces between the object and the terminal device 130.

The Bluetooth module 1470 is configured to perform information interaction with another Bluetooth device having a Bluetooth module through the Bluetooth protocol. For example, the terminal device can establish a Bluetooth connection with a wearable electronic device (e.g., a smartwatch) that is also equipped with a Bluetooth module, through the Bluetooth module 1470 for data interaction.

The processor 1480 is a control center of the terminal device, which is connected to various parts of the terminal device through various interfaces and lines, and is configured to perform various functions of the terminal device and process data by running or executing the software program stored in the memory 1420 and calling the data stored in the memory 1420. In all embodiments of the present disclosure, the processor 1480 may include one or more processing units. The processor 1480 may also integrate an application processor and a baseband processor. The application processor mainly processes the operating system, the user interface, the application, and the like. The baseband processor mainly processes wireless communication. The baseband processor may not be integrated into the processor 1480. The processor 1480 in this application may run the operating system and the application, display a user interface, respond to a touch, and execute the method for detecting a pose of an AR device according to all embodiments of the present disclosure. In addition, the processor 1480 is coupled to the display unit 1430.

In some possible implementations, the aspects of the method for detecting a pose of an AR device provided in this application may also be embodied in the form of a program product, which includes a computer program. When the program product is executed by the processor, the operations in the method for detecting a pose of an AR device according to various exemplary implementations of this application in the above description of this specification are implemented. For example, the electronic device may perform the operations shown in FIG. 2.

In this application, a readable storage medium may be any tangible medium containing or storing a program that may be used by or in combination with an instruction execution system, apparatus, or device. A readable signal medium may include a data signal propagated in a baseband or as part of a carrier. The data signal carries a readable computer program. Such a propagated data signal may be in a variety of forms including, but not limited to, an electromagnetic signal, an optical signal, or any suitable combination thereof. The readable signal medium may also be any readable medium other than the readable storage medium. The readable medium may send, propagate, or transmit a program that is used by or used in combination with an instruction execution system, apparatus or device.

The computer program stored on the readable medium may be transmitted in any appropriate medium, including, but not limited to, a wireless connection, a wired connection, an optical cable, radio frequency (RF), etc., or any suitable combination thereof.

The computer program for performing the operations of this application may be written in any combination of one or more programming languages. The computer program may be executed entirely on an object electronic device, partly on the object electronic device, as an independent software package, partly on the object electronic device and partly on a remote electronic device, or entirely on a remote electronic device or a server. In cases involving the use of a remote electronic device, the remote electronic device may be connected to the object electronic device through any type of network, including a local area network (LAN) or a wide area network (WAN), or may be connected to an external electronic device (e.g., through an Internet connected provided by an Internet service provider).

Although several units or subunits of the apparatus are mentioned in the above detailed description, such division is merely exemplary and not mandatory. In fact, the features and functions of two or more units described above may be embodied in a single unit, depending on the implementations of this application. Similarly, the features and functions of one unit described above may be further divided and embodied in a plurality of units.

In addition, although the operations of the method in this application are described in a specific order in the accompanying drawings, this does not require or imply that the operations have to be performed in the specific order, or all the operations shown have to be performed to achieve an expected result. Additionally or alternatively, some operations may be omitted, a plurality of operations may be combined into one operation, and/or one operation may be decomposed into a plurality of operations for execution.

This application is described with reference to flowcharts and/or block diagrams of the method, the device (system), and the computer program product in all embodiments of the present disclosure. Computer program instructions may be used to implement each procedure and/or block in the flowcharts and/or block diagrams and a combination of procedures and/or blocks in the flowcharts and/or block diagrams. These computer program instructions may be provided to a general-purpose computer, a special-purpose computer, an embedded processor, or a processor of another programmable data processing device to generate a machine, so that an apparatus configured to implement functions specified in one or more procedures in the flowcharts and/or one or more blocks in the block diagrams is generated by using instructions executed by the general-purpose computer or the processor of the another programmable data processing device.

These computer program instructions may also be stored in a computer readable memory that can guide a computer or another programmable data processing device to operate in a specific manner, so that the instructions stored in the computer readable memory generate a product including an instruction apparatus, where the instruction apparatus implements functions specified in one or more procedures in the flowcharts and/or one or more blocks in the block diagrams.

These computer program instructions may also be loaded into a computer or another programmable data processing device, so that a series of operations are performed on the computer or another programmable data processing device to generate processing implemented by a computer, and instructions executed on the computer or another programmable data processing device provide operations for implementing functions specified in one or more procedures in the flowcharts and/or one or more blocks in the block diagrams.

In the specification, claims, and accompanying drawings of this application, the terms "first", "second", "third", "fourth", "1", "2", and so on (if any) are intended to distinguish between similar objects but do not necessarily indicate a specific order or sequence. The data termed in such a way are interchangeable in appropriate circumstances, so that all embodiments of the present disclosure described herein can be implemented in orders other than the order illustrated or described herein.

Although some embodiments of this application have been described, those skilled in the art can make changes and modifications to these embodiments once they learn the basic inventive concept. The scope of the invention and its embodiments is defined by the appended claims.

## Claims

1. A computer-implemented method for detecting a pose of an augmented reality, AR, device, the method comprising:
acquiring, by illuminating the AR device with detection light, at least two images based on different photographing positions and/or orientations, the acquired images each comprising image feature points obtained by reflecting the detection light at device feature points on the AR device;
obtaining, based on the at least two acquired images, predicted distances each corresponding to one of at least two target image feature point pairs, the at least two target image feature point pairs sharing a common target image feature point;
determining target device feature points respectively corresponding to target image feature points of the at least two target image feature point pairs based on a comparison between the predicted distances and pre-determined distances between the device feature points on the AR device; and
determining pose information of the AR device based on respective position information of the target device feature points and the target image feature points.

2. The method according to claim 1, wherein each of the images is acquired based on an acquisition device located at one of the photographing positions; and
the determining predicted distances of at least two target image feature point pairs comprising a common target image feature point based on the at least two acquired images comprises:
for a target image feature point pair of the at least two target image feature point pairs, determining a predicted distance of the target image feature point pair, based on a distance between the two target image feature points in the target image feature point pair in each acquired image and calibration parameters configured for representing a position relationship between the at least two acquisition devices.

3. The method according to claim 1, wherein the pre-determined distance between any two device feature points is different, and a difference between any two pre-determined distances is greater than a first preset threshold.

4. The method according to any one of claims 1 to 3, wherein the determining target device feature points respectively corresponding to the target image feature points of the at least two target image feature point pairs based on a comparison between the predicted distances and pre-determined distances between the device feature points on the AR device comprises:
for a device feature point pair, comparing the pre-determined distance between two device feature points in the device feature point pair on the AR device with the predicted distance;
determining at least two device feature point pairs comprising a common device feature point based on the comparison, wherein a difference between the pre-determined distance of each device feature point pair and the corresponding predicted distance is less than a second preset threshold, and the second preset threshold is not greater than the first preset threshold; and
determining the target device feature points respectively corresponding to the target image feature points from the at least two device feature point pairs.

5. The method according to claim 4, wherein two target image feature point pairs exist, and the predicted distances comprise a first predicted distance of a first target image feature point pair and a second predicted distance of a second target image feature point pair; and
the determining at least two device feature point pairs comprising a common device feature point comprises:
determining two device feature points having a difference between the corresponding pre-determined distance and the first predicted distance being less than the second preset threshold as a first device feature point pair corresponding to the first target image feature point pair; and
searching for at least one other device feature point pair that has a difference between the corresponding pre-determined distance and the second predicted distance being less than the second preset threshold and that shares a common device feature point with the first device feature point pair.

6. The method according to claim 5, wherein the determining the target device feature points respectively corresponding to the target image feature points from the at least two device feature point pairs comprises:
determining a second device feature point pair corresponding to the second target image feature point pair from the at least one other device feature point pair;
determining a common device feature point as the target device feature point corresponding to the common target image feature point;
determining the device feature point in the first device feature point pair, other than the common device feature point, as the target device feature point corresponding to the image feature point in the first target image feature point pair other than the common image feature point; and
determining the device feature point in the second device feature point pair, other than the common device feature point, as the target device feature point corresponding to the image feature point in the second target image feature point pair other than the common image feature point.

7. The method according to claim 6, wherein the determining a second device feature point pair corresponding to the second target image feature point pair from the at least one other device feature point pair comprises:
if one other device feature point pairs exists, determining the other device feature point pair as the second device feature point pair corresponding to the second target image feature point pair; and
if a plurality of other device feature point pairs exist, selecting one of the plurality of other device feature point pairs as the second device feature point pair corresponding to the second target image feature point pair based on a relationship between the pre-determined distances of the plurality of other device feature point pairs.

8. The method according to claim 7, wherein the selecting one of the plurality of other device feature point pairs as the second device feature point pair corresponding to the second target image feature point pair based on a relationship between the pre-determined distances of the plurality of other device feature point pairs comprises:
determining the other device feature point pair having a difference between the corresponding pre-determined distance and the second predicted distance being the smallest as the second device feature point pair corresponding to the second target image feature point pair.

9. The method according to any of claims 1 to 3, wherein the determining pose information of the AR device based on respective position information of the target device feature points and the target image feature points comprises:
determining relative position information of the AR device with respect to a base station based on position information of the target device feature points in an AR device coordinate system and position information of the target image feature points in a base station coordinate system; and
determining the relative position information as the pose information of the AR device.

10. The method according to any one of claims 1 to 3, wherein each of the images is acquired based on an acquisition device located at one of the photographing positions; and the method further comprises:
predicting reference position information of at least one candidate device feature point other than the target device feature points in a base station coordinate system based on the pose information and position information of the at least one candidate device feature point in an AR device coordinate system;
predicting position information of the at least one candidate device feature point in the AR device coordinate system based on the reference position information, calibration parameters configured for representing a position relationship between the at least two acquisition devices, and the pose information; and
adjusting the pose information respectively based on a difference between the position information of the at least one candidate device feature point each in the AR device coordinate system and the corresponding predicted position information.

11. The method according to claim 10, wherein the predicting position information of the at least one candidate device feature point in the AR device coordinate system based on the reference position information, calibration parameters configured for representing a position relationship between the at least two acquisition devices, and the pose information comprises:
predicting a feature point position of the at least one candidate device feature point each in the acquired image based on the reference position information and the calibration parameters;
for each feature point position, determining the image feature point that has a distance between the feature point position is within a preset range as a candidate image feature point corresponding to the candidate device feature point; and
respectively predicting the position information of the corresponding candidate device feature points in the AR device coordinate system based on position information of at least one candidate image feature point in the base station coordinate system and the pose information.

12. The method according to any one of claims 1 to 3, wherein each device feature point on the AR device is of a material capable of reflecting infrared light.

13. An electronic device, comprising a processor and a memory, the memory having a computer program stored therein, the computer program, when executed by the processor, causing the processor to implement the operations of the method according to any one of claims 1 to 12.

14. A computer-readable storage medium, having a computer program stored therein, the computer program, when executed by a processor, causing the processor to implement the operations of the method according to any one of claims 1 to 12.

15. A computer program product, comprising a computer program, the computer program, when executed by a processor, causing the processor to implement the operations of the method according to any one of claims 1 to 12.

## Patentansprüche

1. Computerimplementiertes Verfahren zum Erkennen einer Pose eines Augmented-Reality(AR)-Geräts, wobei das Verfahren umfasst:
Erfassen, durch Beleuchten des AR-Geräts mit Detektionslicht, von mindestens zwei Bildern basierend auf verschiedenen Aufnahmepositionen und/oder Orientierungen, wobei die erfassten Bilder jeweils Bildmerkmalspunkte umfassen, die durch Reflektieren des Detektionslichts an Gerätemerkmalspunkten am AR-Gerät erhalten werden;
Erhalten, basierend auf den mindestens zwei erfassten Bildern, von vorhergesagten Abständen, die jeweils einem von mindestens zwei Ziel-Bildmerkmalspunktpaaren entsprechen, wobei die mindestens zwei Ziel-Bildmerkmalspunktpaare einen gemeinsamen Ziel-Bildmerkmalspunkt teilen;
Bestimmen von Ziel-Gerätemerkmalspunkten, die jeweils Ziel-Bildmerkmalspunkten der mindestens zwei Ziel-Bildmerkmalspunktpaare entsprechen, basierend auf einem Vergleich zwischen den vorhergesagten Abständen und vorbestimmten Abständen zwischen den Gerätemerkmalspunkten am AR-Gerät; und
Bestimmen von Poseninformation des AR-Geräts basierend auf jeweiliger Positionsinformation der Ziel-Gerätemerkmalspunkte und der Ziel-Bildmerkmalspunkte.

2. Verfahren nach Anspruch 1, wobei jedes der Bilder basierend auf einer Aufnahmevorrichtung erfasst wird, die sich an einer der Aufnahmepositionen befindet; und
das Bestimmen von vorhergesagten Abständen von mindestens zwei Ziel-Bildmerkmalspunktpaaren, die einen gemeinsamen Ziel-Bildmerkmalspunkt umfassen, basierend auf den mindestens zwei erfassten Bildern, umfasst:
für ein Ziel-Bildmerkmalspunktpaar der mindestens zwei Ziel-Bildmerkmalspunktpaare, Bestimmen eines vorhergesagten Abstands des Ziel-Bildmerkmalspunktpaars, basierend auf einem Abstand zwischen den zwei Ziel-Bildmerkmalspunkten in dem Ziel-Bildmerkmalspunktpaar in jedem erfassten Bild und Kalibrierparametern, die zum Darstellen einer Positionsbeziehung zwischen den mindestens zwei Aufnahmevorrichtungen konfiguriert sind.

3. Verfahren nach Anspruch 1, wobei der vorbestimmte Abstand zwischen je zwei Gerätemerkmalspunkten verschieden ist und eine Differenz zwischen je zwei vorbestimmten Abständen größer als ein erster voreingestellter Schwellenwert ist.

4. Verfahren nach einem der Ansprüche 1 bis 3, wobei das Bestimmen von Ziel-Gerätemerkmalspunkten, die jeweils den Ziel-Bildmerkmalspunkten der mindestens zwei Ziel-Bildmerkmalspunktpaare entsprechen, basierend auf einem Vergleich zwischen den vorhergesagten Abständen und vorbestimmten Abständen zwischen den Gerätemerkmalspunkten am AR-Gerät, umfasst:
für ein Gerätemerkmalspunktpaar, Vergleichen des vorbestimmten Abstands zwischen zwei Gerätemerkmalspunkten in dem Gerätemerkmalspunktpaar am AR-Gerät mit dem vorhergesagten Abstand;
Bestimmen von mindestens zwei Gerätemerkmalspunktpaaren, die einen gemeinsamen Gerätemerkmalspunkt umfassen, basierend auf dem Vergleich, wobei eine Differenz zwischen dem vorbestimmten Abstand jedes Gerätemerkmalspunktpaars und dem entsprechenden vorhergesagten Abstand kleiner als ein zweiter voreingestellter Schwellenwert ist und der zweite voreingestellte Schwellenwert nicht größer als der erste voreingestellte Schwellenwert ist; und
Bestimmen der Ziel-Gerätemerkmalspunkte, die jeweils den Ziel-Bildmerkmalspunkten entsprechen, aus den mindestens zwei Gerätemerkmalspunktpaaren.

5. Verfahren nach Anspruch 4, wobei zwei Ziel-Bildmerkmalspunktpaare vorhanden sind und die vorhergesagten Abstände einen ersten vorhergesagten Abstand eines ersten Ziel-Bildmerkmalspunktpaars und einen zweiten vorhergesagten Abstand eines zweiten Ziel-Bildmerkmalspunktpaars umfassen; und
das Bestimmen von mindestens zwei Gerätemerkmalspunktpaaren, die einen gemeinsamen Gerätemerkmalspunkt umfassen, umfasst: Bestimmen von zwei Gerätemerkmalspunkten, bei denen eine Differenz zwischen dem entsprechenden vorbestimmten Abstand und dem ersten vorhergesagten Abstand kleiner als der zweite voreingestellte Schwellenwert ist, als ein erstes Gerätemerkmalspunktpaar, das dem ersten Ziel-Bildmerkmalspunktpaar entspricht; und
Suchen nach mindestens einem weiteren Gerätemerkmalspunktpaar, das eine Differenz zwischen dem entsprechenden vorbestimmten Abstand und dem zweiten vorhergesagten Abstand aufweist, die kleiner als der zweite voreingestellte Schwellenwert ist, und das einen gemeinsamen Gerätemerkmalspunkt mit dem ersten Gerätemerkmalspunktpaar teilt.

6. Verfahren nach Anspruch 5, wobei das Bestimmen der Ziel-Gerätemerkmalspunkte, die jeweils den Ziel-Bildmerkmalspunkten entsprechen, aus den mindestens zwei Gerätemerkmalspunktpaaren umfasst:
Bestimmen eines zweiten Gerätemerkmalspunktpaars, das dem zweiten Ziel-Bildmerkmalspunktpaar entspricht, aus dem mindestens einen weiteren Gerätemerkmalspunktpaar; Bestimmen eines gemeinsamen Gerätemerkmalspunkts als den Ziel-Gerätemerkmalspunkt, der dem gemeinsamen Ziel-Bildmerkmalspunkt entspricht;
Bestimmen des Gerätemerkmalspunkts in dem ersten Gerätemerkmalspunktpaar, bei dem es sich nicht um den gemeinsamen Gerätemerkmalspunkt handelt, als den Ziel-Gerätemerkmalspunkt, der dem Bildmerkmalspunkt in dem ersten Ziel-Bildmerkmalspunktpaar entspricht, bei dem es sich nicht um den gemeinsamen Bildmerkmalspunkt handelt; und
Bestimmen des Gerätemerkmalspunkts in dem zweiten Gerätemerkmalspunktpaar, bei dem es sich nicht um den gemeinsamen Gerätemerkmalspunkt handelt, als den Ziel-Gerätemerkmalspunkt, der dem Bildmerkmalspunkt in dem zweiten Ziel-Bildmerkmalspunktpaar entspricht, bei dem es sich nicht um den gemeinsamen Bildmerkmalspunkt handelt.

7. Verfahren nach Anspruch 6, wobei das Bestimmen eines zweiten Gerätemerkmalspunktpaars, das dem zweiten Ziel-Bildmerkmalspunktpaar entspricht, aus dem mindestens einen weiteren Gerätemerkmalspunktpaar umfasst:
falls ein weiteres Gerätemerkmalspunktpaar vorhanden ist, Bestimmen des weiteren Gerätemerkmalspunktpaars als das zweite Gerätemerkmalspunktpaar, das dem zweiten Ziel-Bildmerkmalspunktpaar entspricht; und
falls eine Mehrzahl weiterer Gerätemerkmalspunktpaare vorhanden ist, Auswählen eines der Mehrzahl weiterer Gerätemerkmalspunktpaare als das zweite Gerätemerkmalspunktpaar, das dem zweiten Ziel-Bildmerkmalspunktpaar entspricht, basierend auf einer Beziehung zwischen den vorbestimmten Abständen der Mehrzahl weiterer Gerätemerkmalspunktpaare.

8. Verfahren nach Anspruch 7, wobei das Auswählen eines der Mehrzahl weiterer Gerätemerkmalspunktpaare als das zweite Gerätemerkmalspunktpaar, das dem zweiten Ziel-Bildmerkmalspunktpaar entspricht, basierend auf einer Beziehung zwischen den vorbestimmten Abständen der Mehrzahl weiterer Gerätemerkmalspunktpaare umfasst:
Bestimmen des weiteren Gerätemerkmalspunktpaars, bei dem eine Differenz zwischen dem entsprechenden vorbestimmten Abstand und dem zweiten vorhergesagten Abstand am kleinsten ist, als das zweite Gerätemerkmalspunktpaar, das dem zweiten Ziel-Bildmerkmalspunktpaar entspricht.

9. Verfahren nach einem der Ansprüche 1 bis 3, wobei das Bestimmen von Poseninformation des AR-Geräts basierend auf jeweiliger Positionsinformation der Ziel-Gerätemerkmalspunkte und der Ziel-Bildmerkmalspunkte umfasst:
Bestimmen von relativer Positionsinformation des AR-Geräts in Bezug auf eine Basisstation basierend auf Positionsinformation der Ziel-Gerätemerkmalspunkte in einem AR-Geräte-Koordinatensystem und Positionsinformation der Ziel-Bildmerkmalspunkte in einem Koordinatensystem der Basisstation; und
Bestimmen der relativen Positionsinformation als die Poseninformation des AR-Geräts.

10. Verfahren nach einem der Ansprüche 1 bis 3, wobei jedes der Bilder basierend auf einer Aufnahmevorrichtung erfasst wird, die sich an einer der Aufnahmepositionen befindet; und das Verfahren ferner umfasst:
Vorhersagen von Referenzpositionsinformation mindestens eines Kandidaten-Gerätemerkmalspunkts außer den Ziel-Gerätemerkmalspunkten in einem Koordinatensystem der Basisstation basierend auf der Poseninformation und Positionsinformation des mindestens einen Kandidaten-Gerätemerkmalspunkts in einem AR-Geräte-Koordinatensystem;
Vorhersagen von Positionsinformation des mindestens einen Kandidaten-Gerätemerkmalspunkts in dem AR-Geräte-Koordinatensystem basierend auf der Referenzpositionsinformation, Kalibrierparametern, die zum Darstellen einer Positionsbeziehung zwischen den mindestens zwei Aufnahmevorrichtungen konfiguriert sind, und der Poseninformation; und
Anpassen der Poseninformation jeweils basierend auf einer Differenz zwischen der Positionsinformation des mindestens einen Kandidaten-Gerätemerkmalspunkts jeweils in dem AR-Geräte-Koordinatensystem und der entsprechenden vorhergesagten Positionsinformation.

11. Verfahren nach Anspruch 10, wobei das Vorhersagen von Positionsinformation des mindestens einen Kandidaten-Gerätemerkmalspunkts in dem AR-Geräte-Koordinatensystem basierend auf der Referenzpositionsinformation, Kalibrierparametern, die zum Darstellen einer Positionsbeziehung zwischen den mindestens zwei Aufnahmevorrichtungen konfiguriert sind, und der Poseninformation umfasst:
Vorhersagen einer Merkmalspunktposition des mindestens einen Kandidaten-Gerätemerkmalspunkts jeweils in dem erfassten Bild basierend auf der Referenzpositionsinformation und den Kalibrierparametern;
für jede Merkmalspunktposition, Bestimmen des Bildmerkmalspunkts, bei dem ein Abstand zwischen der Merkmalspunktposition innerhalb eines voreingestellten Bereichs liegt, als einen Kandidaten-Bildmerkmalspunkt, der dem Kandidaten-Gerätemerkmalspunkt entspricht; und
jeweils Vorhersagen der Positionsinformation der entsprechenden Kandidaten-Gerätemerkmalspunkte in dem AR-Geräte-Koordinatensystem basierend auf Positionsinformation mindestens eines Kandidaten-Bildmerkmalspunkts in dem Koordinatensystem der Basisstation und der Poseninformation.

12. Verfahren nach einem der Ansprüche 1 bis 3, wobei jeder Gerätemerkmalspunkt am AR-Gerät aus einem Material besteht, das Infrarotlicht reflektieren kann.

13. Elektronisches Gerät, umfassend einen Prozessor und einen Speicher, wobei der Speicher ein darin gespeichertes Computerprogramm aufweist, wobei das Computerprogramm, wenn es durch den Prozessor ausgeführt wird, den Prozessor veranlasst, die Operationen des Verfahrens nach einem der Ansprüche 1 bis 12 zu implementieren.

14. Computerlesbares Speichermedium, mit einem darin gespeicherten Computerprogramm, wobei das Computerprogramm, wenn es durch einen Prozessor ausgeführt wird, den Prozessor veranlasst, die Operationen des Verfahrens nach einem der Ansprüche 1 bis 12 zu implementieren.

15. Computerprogrammprodukt, umfassend ein Computerprogramm, wobei das Computerprogramm, wenn es durch einen Prozessor ausgeführt wird, den Prozessor veranlasst, die Operationen des Verfahrens nach einem der Ansprüche 1 bis 12 zu implementieren.

## Revendications

1. Procédé mis en œuvre par ordinateur pour détecter une pose d'un dispositif de réalité augmentée, RA, le procédé comprenant :
acquérir, en illuminant le dispositif de RA avec une lumière de détection, au moins deux images sur la base de différentes positions de prise de vue et/ou orientations, les images acquises comprenant chacune des points caractéristiques d'image obtenus en réfléchissant la lumière de détection au niveau de points caractéristiques de dispositif sur le dispositif de RA ;
obtenir, sur la base des au moins deux images acquises, des distances prédites correspondant chacune à l'une d'au moins deux paires de points caractéristiques d'image cibles, les au moins deux paires de points caractéristiques d'image cibles partageant un point caractéristique d'image cible commun ;
déterminer des points caractéristiques de dispositif cibles correspondant respectivement à des points caractéristiques d'image cibles des au moins deux paires de points caractéristiques d'image cibles sur la base d'une comparaison entre les distances prédites et des distances prédéterminées entre les points caractéristiques de dispositif sur le dispositif de RA ; et
déterminer des informations de pose du dispositif de RA sur la base d'informations de position respectives des points caractéristiques de dispositif cibles et des points caractéristiques d'image cibles.

2. Procédé selon la revendication 1, dans lequel chacune des images est acquise sur la base d'un dispositif d'acquisition qui est situé à l'une des positions de prise de vue ; et
la détermination de distances prédites d'au moins deux paires de points caractéristiques d'image cibles comprenant un point caractéristique d'image cible commun sur la base des au moins deux images acquises comprend :
pour une paire de points caractéristiques d'image cibles parmi les au moins deux paires de points caractéristiques d'image cibles, déterminer une distance prédite de la paire de points caractéristiques d'image cibles, sur la base d'une distance entre les deux points caractéristiques d'image cibles dans la paire de points caractéristiques d'image cibles dans chaque image acquise et de paramètres d'étalonnage configurés pour représenter une relation de position entre les au moins deux dispositifs d'acquisition.

3. Procédé selon la revendication 1, dans lequel la distance prédéterminée entre deux points caractéristiques de dispositif quelconques est différente, et une différence entre deux distances prédéterminées quelconques est supérieure à un premier seuil prédéfini.

4. Procédé selon l'une quelconque des revendications 1 à 3, dans lequel la détermination de points caractéristiques de dispositif cibles correspondant respectivement aux points caractéristiques d'image cibles des au moins deux paires de points caractéristiques d'image cibles sur la base d'une comparaison entre les distances prédites et des distances prédéterminées entre les points caractéristiques de dispositif sur le dispositif de RA comprend :
pour une paire de points caractéristiques de dispositif, comparer la distance prédéterminée entre deux points caractéristiques de dispositif dans la paire de points caractéristiques de dispositif sur le dispositif de RA avec la distance prédite ;
déterminer au moins deux paires de points caractéristiques de dispositif comprenant un point caractéristique de dispositif commun sur la base de la comparaison, dans lesquelles une différence entre la distance prédéterminée de chaque paire de points caractéristiques de dispositif et la distance prédite correspondante est inférieure à un deuxième seuil prédéfini, et le deuxième seuil prédéfini n'est pas supérieur au premier seuil prédéfini ; et
déterminer les points caractéristiques de dispositif cibles correspondant respectivement aux points caractéristiques d'image cibles à partir des au moins deux paires de points caractéristiques de dispositif.

5. Procédé selon la revendication 4, dans lequel deux paires de points caractéristiques d'image cibles existent, et les distances prédites comprennent une première distance prédite d'une première paire de points caractéristiques d'image cibles et une deuxième distance prédite d'une deuxième paire de points caractéristiques d'image cibles ; et
la détermination d'au moins deux paires de points caractéristiques de dispositif comprenant un point caractéristique de dispositif commun comprend :
déterminer deux points caractéristiques de dispositif ayant une différence entre la distance prédéterminée correspondante et la première distance prédite inférieure au deuxième seuil prédéfini en tant que première paire de points caractéristiques de dispositif correspondant à la première paire de points caractéristiques d'image cibles ; et
rechercher au moins une autre paire de points caractéristiques de dispositif qui a une différence entre la distance prédéterminée correspondante et la deuxième distance prédite inférieure au deuxième seuil prédéfini et qui partage un point caractéristique de dispositif commun avec la première paire de points caractéristiques de dispositif.

6. Procédé selon la revendication 5, dans lequel la détermination des points caractéristiques de dispositif cibles correspondant respectivement aux points caractéristiques d'image cibles à partir des au moins deux paires de points caractéristiques de dispositif comprend :
déterminer une deuxième paire de points caractéristiques de dispositif correspondant à la deuxième paire de points caractéristiques d'image cibles à partir de l'au moins une autre paire de points caractéristiques de dispositif ;
déterminer un point caractéristique de dispositif commun en tant que point caractéristique de dispositif cible correspondant au point caractéristique d'image cible commun ; déterminer le point caractéristique de dispositif dans la première paire de points caractéristiques de dispositif, autre que le point caractéristique de dispositif commun, en tant que point caractéristique de dispositif cible correspondant au point caractéristique d'image dans la première paire de points caractéristiques d'image cibles autre que le point caractéristique d'image commun ; et
déterminer le point caractéristique de dispositif dans la deuxième paire de points caractéristiques de dispositif, autre que le point caractéristique de dispositif commun, en tant que point caractéristique de dispositif cible correspondant au point caractéristique d'image dans la deuxième paire de points caractéristiques d'image cibles autre que le point caractéristique d'image commun.

7. Procédé selon la revendication 6, dans lequel la détermination d'une deuxième paire de points caractéristiques de dispositif correspondant à la deuxième paire de points caractéristiques d'image cibles à partir de l'au moins une autre paire de points caractéristiques de dispositif comprend :
si une autre paire de points caractéristiques de dispositif existe, déterminer l'autre paire de points caractéristiques de dispositif en tant que deuxième paire de points caractéristiques de dispositif correspondant à la deuxième paire de points caractéristiques d'image cibles ; et
si une pluralité d'autres paires de points caractéristiques de dispositif existent, sélectionner l'une de la pluralité d'autres paires de points caractéristiques de dispositif en tant que deuxième paire de points caractéristiques de dispositif correspondant à la deuxième paire de points caractéristiques d'image cibles sur la base d'une relation entre les distances prédéterminées de la pluralité d'autres paires de points caractéristiques de dispositif.

8. Procédé selon la revendication 7, dans lequel la sélection de l'une de la pluralité d'autres paires de points caractéristiques de dispositif en tant que deuxième paire de points caractéristiques de dispositif correspondant à la deuxième paire de points caractéristiques d'image cibles sur la base d'une relation entre les distances prédéterminées de la pluralité d'autres paires de points caractéristiques de dispositif comprend :
déterminer l'autre paire de points caractéristiques de dispositif ayant une différence entre la distance prédéterminée correspondante et la deuxième distance prédite étant la plus petite en tant que deuxième paire de points caractéristiques de dispositif correspondant à la deuxième paire de points caractéristiques d'image cibles.

9. Procédé selon l'une quelconque des revendications 1 à 3, dans lequel la détermination d'informations de pose du dispositif de RA sur la base d'informations de position respectives des points caractéristiques de dispositif cibles et des points caractéristiques d'image cibles comprend :
déterminer des informations de position relative du dispositif de RA par rapport à une station de base sur la base d'informations de position des points caractéristiques de dispositif cibles dans un système de coordonnées du dispositif de RA et d'informations de position des points caractéristiques d'image cibles dans un système de coordonnées de la station de base ; et
déterminer les informations de position relative en tant qu'informations de pose du dispositif de RA.

10. Procédé selon l'une quelconque des revendications 1 à 3, dans lequel chacune des images est acquise sur la base d'un dispositif d'acquisition qui est situé à l'une des positions de prise de vue ; et le procédé comprend en outre :
prédire des informations de position de référence d'au moins un point caractéristique de dispositif candidat autre que les points caractéristiques de dispositif cibles dans un système de coordonnées de la station de base sur la base des informations de pose et d'informations de position de l'au moins un point caractéristique de dispositif candidat dans un système de coordonnées du dispositif de RA ;
prédire des informations de position de l'au moins un point caractéristique de dispositif candidat dans le système de coordonnées du dispositif de RA sur la base des informations de position de référence, de paramètres d'étalonnage configurés pour représenter une relation de position entre les au moins deux dispositifs d'acquisition, et des informations de pose ; et
ajuster les informations de pose respectivement sur la base d'une différence entre les informations de position de l'au moins un point caractéristique de dispositif candidat chacun dans le système de coordonnées du dispositif de RA et les informations de position prédites correspondantes.

11. Procédé selon la revendication 10, dans lequel la prédiction d'informations de position de l'au moins un point caractéristique de dispositif candidat dans le système de coordonnées du dispositif de RA sur la base des informations de position de référence, de paramètres d'étalonnage configurés pour représenter une relation de position entre les au moins deux dispositifs d'acquisition, et des informations de pose comprend :
prédire une position de point caractéristique de l'au moins un point caractéristique de dispositif candidat chacun dans l'image acquise sur la base des informations de position de référence et des paramètres d'étalonnage ;
pour chaque position de point caractéristique, déterminer le point caractéristique d'image dont une distance entre la position de point caractéristique est dans une plage prédéfinie en tant que point caractéristique d'image candidat correspondant au point caractéristique de dispositif candidat ; et
prédire respectivement les informations de position des points caractéristiques de dispositif candidats correspondants dans le système de coordonnées du dispositif de RA sur la base d'informations de position d'au moins un point caractéristique d'image candidat dans le système de coordonnées de la station de base et des informations de pose.

12. Procédé selon l'une quelconque des revendications 1 à 3, dans lequel chaque point caractéristique de dispositif sur le dispositif de RA est d'un matériau capable de réfléchir la lumière infrarouge.

13. Dispositif électronique, comprenant un processeur et une mémoire, la mémoire ayant un programme informatique qui y est stocké, le programme informatique, lorsqu'il est exécuté par le processeur, amenant le processeur à mettre en œuvre les opérations du procédé selon l'une quelconque des revendications 1 à 12.

14. Support de stockage lisible par ordinateur, ayant un programme informatique qui y est stocké, le programme informatique, lorsqu'il est exécuté par un processeur, amenant le processeur à mettre en œuvre les opérations du procédé selon l'une quelconque des revendications 1 à 12.

15. Produit-programme d'ordinateur, comprenant un programme informatique, le programme informatique, lorsqu'il est exécuté par un processeur, amenant le processeur à mettre en œuvre les opérations du procédé selon l'une quelconque des revendications 1 à 12.
